# EUROPEAN PATENT APPLICATION

(11) **EP 3 540 588 A1**
(43) Date of publication of application: **18.09.2019**
(21) Application number: 19159394.6
(22) Date of filing: 26.02.2019
(51) Int. Cl.: G06F 3/12, H04N 1/00

(54) **IMAGE PROCESSING METHOD, IMAGE PROCESSING APPARATUS, AND INFORMATION PROCESSING TERMINAL**

(30) Priority: 16.03.2018 JP 2018048708; 31.05.2018 JP 2018105080
(71) Applicant: Oki Data Corporation, Tokyo 108 (JP)
(72) Inventor: IWAMOTO, Takara, Tokyo, 108-8551 (JP); SATO, Atsushi, Tokyo, 108-8551 (JP); SASAGAWA, Yujiro, Tokyo, 108-8551 (JP)
(74) Representative: Piotrowicz, Pawel Jan Andrzej

(57) **Abstract**

An image processing method includes: performing, by an image processing system (1, 1A, 2, 3, 4, 5, 6) including an image processing apparatus (10, 10A, 30, 60, 310) and an information processing terminal (20, 40, 70, 320, 340, 360) that are able to communicate with each other, a first process that acquires process setting information (IJ, IJ2, IS), the process setting information (IJ, IJ2, IS) being used by the image processing apparatus (10, 10A, 30, 60, 310) when the image processing apparatus (10, 10A, 30, 60, 310) performs a predetermined image process; performing, by the image processing system (1, 1A, 2, 3, 4, 5, 6), a second process that acquires terminal setting information (CL, IU, IU2, IU3, IM) stored in the information processing terminal (20, 40, 70, 320, 340, 360), the terminal setting information (CL, IU, IU2, IU3, IM) being to be used in the information processing terminal (20, 40, 70, 320, 340, 360); performing, by the image processing system (1, 1A, 2, 3, 4, 5, 6), a third process that generates guidance information (IG) pertaining to the process setting information (IJ, IJ2, IS) on the basis of the process setting information (IJ, IJ2, IS) and the terminal setting information (CL, IU, IU2, IU3, IM); and displaying, by the image processing system (1, 1A, 2, 3, 4, 5, 6), the guidance information (IG).

## Description

### BACKGROUND

The technology relates to an image processing method for use in an image processing system that performs an image process.

In some image forming systems, an image forming apparatus and a mobile terminal are configured to cooperate with each other. For example, according to a technique disclosed in Japanese Unexamined Patent Application Publication No. 2016-221831, an image forming apparatus transmits, to a mobile terminal, information pertaining to content of a user operation, and the mobile terminal outputs the content of that operation through a sound.

### SUMMARY

It is desired that an image processing apparatus be highly user-friendly, and there is expectation for improved user-friendliness.

It is desirable to provide an image processing method that is able to increase user-friendliness.

According to one embodiment of the technology, there is provided an image processing method, including: performing, by an image processing system including an image processing apparatus and an information processing terminal that are able to communicate with each other, a first process that acquires process setting information, the process setting information being used by the image processing apparatus when the image processing apparatus performs a predetermined image process; performing, by the image processing system, a second process that acquires terminal setting information stored in the information processing terminal, the terminal setting information being used in the information processing terminal; performing, by the image processing system, a third process that generates guidance information pertaining to the process setting information on the basis of the process setting information and the terminal setting information; and displaying, by the image processing system, the guidance information.

### BRIEF DESCRIPTION OF THE DRAWINGS

FIG. 1 is a block diagram illustrating an example of a configuration of an image processing system according to one embodiment.
FIG. 2 is a table illustrating an example of a configuration of user setting information.
FIG. 3 is a table illustrating an example of a configuration of a risk extracting list illustrated in FIG. 1.
FIG. 4 is a table illustrating an example of a configuration of a request determining list illustrated in FIG. 1.
FIG. 5 is a table illustrating an example of a configuration of a guidance list illustrated in FIG. 1.
FIG. 6 is a table illustrating an example of the user setting information.
FIG. 7A is a sequence diagram illustrating an example of an operation of the image processing system illustrated in FIG. 1.
FIG. 7B is another sequence diagram illustrating an example of an operation of the image processing system illustrated in FIG. 1.
FIG. 8A is a table illustrating an example of an operation of the image processing system illustrated in FIG. 1.
FIG. 8B is another table illustrating an example of an operation of the image processing system illustrated in FIG. 1.
FIG. 8C is another table illustrating an example of an operation of the image processing system illustrated in FIG. 1.
FIG. 9 is an image diagram illustrating an example of an operation of the image processing system illustrated in FIG. 1.
FIG. 10 is another image diagram illustrating an example of an operation of the image processing system illustrated in FIG. 1.
FIG. 11 is a table illustrating another example of the user setting information.
FIG. 12 is another image diagram illustrating an example of an operation of the image processing system illustrated in FIG. 1.
FIG. 13 is a table illustrating another example of the user setting information.
FIG. 14 is another image diagram illustrating an example of an operation of the image processing system illustrated in FIG. 1.
FIG. 15 is another image diagram illustrating an example of an operation of the image processing system illustrated in FIG. 1.
FIG. 16 is another image diagram illustrating an example of an operation of the image processing system illustrated in FIG. 1.
FIG. 17 is a sequence diagram illustrating an example of an operation of an image processing system according to a modification example of one embodiment.
FIG. 18 is a block diagram illustrating an example of a configuration of an image processing system according to one embodiment.
FIG. 19A is a sequence diagram illustrating an example of an operation of the image processing system illustrated in FIG. 18.
FIG. 19B is another sequence diagram illustrating an example of an operation of the image processing system illustrated in FIG. 18.
FIG. 20 is an image diagram illustrating an example of an operation of the image processing system illustrated in FIG. 18.
FIG. 21 is a block diagram illustrating an example of a configuration of an image processing system according to one embodiment.
FIG. 22 is a block diagram illustrating an example of a configuration of an image processing apparatus and a mobile terminal illustrated FIG. 21.
FIG. 23A is a sequence diagram illustrating an example of an operation of the image processing system illustrated in FIG. 22.
FIG. 23B is another sequence diagram illustrating an example of an operation of the image processing system illustrated in FIG. 22.
FIG. 23C is another sequence diagram illustrating an example of an operation of the image processing system illustrated in FIG. 22.
FIG. 24 is a block diagram illustrating an example of a configuration of an image processing system according to one embodiment.
FIG. 25 is a table illustrating an example of a configuration of user setting information according to one embodiment.
FIG. 26 is a table illustrating an example of a configuration of initial setting information.
FIG. 27 is a flowchart illustrating an example of an operation of an image processing system according to one embodiment.
FIG. 28 is a flowchart illustrating an example of an operation of a guidance information generator according to one embodiment.
FIG. 29 is a table illustrating an example of an operation of the guidance information generator according to one embodiment.
FIG. 30 is an image diagram illustrating an example of an operation of the image processing system according to one embodiment.
FIG. 31 is a sequence diagram illustrating an example of an operation of the image processing system according to one embodiment.
FIG. 32 is a flowchart illustrating an example of an operation of an image processing system according to a modification example of one embodiment.
FIG. 33 is an image diagram illustrating an example of an operation of an image processing system according to another modification example of one embodiment.
FIG. 34 is another image diagram illustrating an example of an operation of an image processing system according to another modification example of one embodiment.
FIG. 35 is a table illustrating an example of a configuration of user setting information according to one embodiment.
FIG. 36A is a flowchart illustrating an example of an operation of a guidance information generator according to one embodiment.
FIG. 36B is another flowchart illustrating an example of an operation of the guidance information generator according to one embodiment.
FIG. 36C is another flowchart illustrating an example of an operation of the guidance information generator according to one embodiment.
FIG. 37 is an image diagram illustrating an example of an operation of an image processing system according to a modification example of one embodiment.
FIG. 38 is a block diagram illustrating an example of a configuration of an image processing system according to one embodiment.
FIG. 39 is a flowchart illustrating an example of an operation of a guidance information generator according to one embodiment.
FIG. 40 is an image diagram illustrating an example of an operation of an image processing system according to a modification example of one embodiment.

### DETAILED DESCRIPTION

Hereinafter, some example embodiments of the technology will be described in detail with reference to the drawings. Note that the following description is directed to illustrative examples of the technology and not to be construed as limiting to the technology. Factors including, without limitation, numerical values, shapes, materials, components, positions of the components, and how the components are coupled to each other are illustrative only and not to be construed as limiting to the technology. Further, elements in the following example embodiments which are not recited in a most-generic independent claim of the technology are optional and may be provided on an as-needed basis. The drawings are schematic and are not intended to be drawn to scale. Note that the like elements are denoted with the same reference numerals, and any redundant description thereof will not be described in detail. The description will be given in the following order.
1. First Example Embodiment
2. Second Example Embodiment
3. Third Example Embodiment
4. Fourth Example Embodiment
5. Fifth Example Embodiment
6. Sixth Example Embodiment

### [1. First Example Embodiment]

### [Configuration Example]

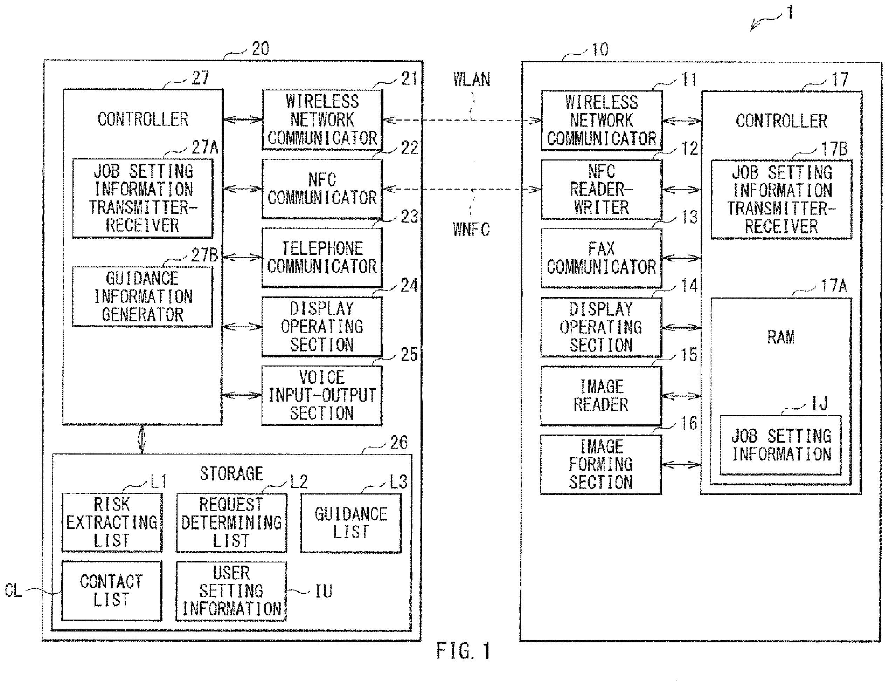

FIG. 1 illustrates an example of a configuration of an image processing system 1 in which an image processing method according to a first example embodiment of the technology is used. The image processing system 1 may include an image processing apparatus 10 and a mobile terminal 20.

The image processing apparatus 10 may be a so-called multifunction peripheral (MFP) having, for example but not limited to, a copy function, a fax function, a scan function, and a print function. The image processing apparatus 10 may perform, with the mobile terminal 20, near-field communication (NFC) WNFC and wireless network communication WLAN that involves a wireless local area network (LAN).

In this example, the mobile terminal 20 may be a so-called smartphone. This, however, is not a limiting example. In an alternative example, the mobile terminal 20 may be a tablet terminal, a laptop personal computer, a mobile phone, or any of various wearable terminals. The mobile terminal 20 may perform, with the image processing apparatus 10, the near-field communication WNFC and the wireless network communication WLAN that involves the wireless LAN.

Through this configuration, in the image processing system 1, a user may log in to the image processing apparatus 10 by placing the mobile terminal 20 over the image processing apparatus 10 and thereafter submit a job by operating the image processing apparatus 10. In this case, the image processing apparatus 10 may supply, to the mobile terminal 20, information on a setting of the submitted job, i.e., job setting information IJ described later, through the wireless network communication WLAN. On the basis of this job setting information IJ and information on a user setting in the mobile terminal 20, the mobile terminal 20 may generate information to be provided to the user, i.e., guidance information IG described later, and display this guidance information IG on a display operating section. The information on the user setting may include user setting information IU and a contact list CL, which will be described later. The guidance information IG may include, for example, information on a setting that may serve as an alternative to the job setting information IJ. In a case where the user accepts a proposal indicated by the guidance information IG, the mobile terminal 20 may generate job setting information IJ2 corresponding to the guidance information IG in accordance with a user operation. The mobile terminal 20 may supply this job setting information IJ2 to the image processing apparatus 10 through the wireless network communication WLAN. The image processing apparatus 10 may execute the submitted job in accordance with the job setting information IJ2.

### [Image Processing Apparatus 10]

As illustrated in FIG. 1, the image processing apparatus 10 may include a wireless network communicator 11, an NFC reader-writer 12, a FAX communicator 13, a display operating section 14, an image reader 15, an image forming section 16, and a controller 17.

The wireless network communicator 11 may perform the wireless network communication WLAN with the mobile terminal 20 through the wireless LAN.

The NFC reader-writer 12 may write information into storage of an NFC communicator 22, described later, of the mobile terminal 20 or read information from the storage of the NFC communicator 22 with the use of the near-field communication WNFC. Thus, the NFC reader-writer 12 may exchange information with the NFC communicator 22.

The FAX communicator 13 may transmit or receive FAX data to or from a communicating party via a telephone circuit.

The display operating section 14 may receive a user operation and display information such as an operating state of the image processing apparatus 10. The display operating section 14 may include, for example but not limited to, a touch panel, various buttons, a liquid-crystal display, and various indicators.

The image reader 15 may read an image formed on a document medium. The image reader 15 may include, for example, an auto document feeder (ADF). The image reader 15 may generate image data, i.e., scanned data, by reading an image formed on a document medium set directly on a scanner bed or set in the ADF.

The image forming section 16 may form an image such as a black and white image or a color image on a print medium such as paper. In one example, the image forming section 16 may form an image on a print medium on the basis of, for example, print data supplied from the mobile terminal 20 or an unillustrated personal computer, FAX data received by the FAX communicator 13, or scanned data generated by the image reader 15.

The controller 17 may control an operation of the image processing apparatus 10. The controller 17 may include, for example but not limited to, a central processing unit (CPU), a random-access memory (RAM), and a nonvolatile memory. The controller 17 may generate the job setting information IJ upon the user submitting a job. The job setting information IJ may be information on a job setting.

In one example, in a case of a copy job, the job setting information IJ may include information on settings such as "number of copies," "magnification," "pages per sheet," "document type," "color correction," "density," or "contrast." The "number of copies" may indicate the number of sets of printed materials to be produced by forming an image on a print medium. The "magnification" may indicate a scaling factor directed to making an enlarged copy or a reduced copy. The "pages per sheet" may indicate the number of pages of a document medium to be disposed on a single page of a print medium. The "pages per sheet" may be set to one of, for example but not limited to, "normal," "2UP," and "4UP." For example, in the "normal" setting, an image corresponding to a single page of a document medium may be disposed on a single page of a print medium. In the "2UP" setting, an image corresponding to two pages of a document medium may be disposed on a single page of a print medium. In the "4UP" setting, an image corresponding to four pages of a document medium may be disposed on a single page of a print medium. The "document type" may indicate the content of information to be copied. The "document type" may be set to one of, for example but not limited to, "text," "photo," and "text/photo." In a case where the "document type" is set to "text," the image processing apparatus 10 may perform an image process optimized for an image including only text. In a case where the "document type" is set to "photo," the image processing apparatus 10 may perform an image process optimized for an image including only photographs. In a case where the "document type" is set to "text/photo," the image processing apparatus 10 may perform an image process optimized for an image including both text and photographs. The "color correction" may indicate a process of correcting colors in a case where a color image is to be formed on a print medium. The "color correction" may include, for example, setting information for "partial color blindness correction." This "partial color blindness correction" may be set to one of, for example but not limited to, "OFF," "first partial color blindness correction," "second partial color blindness correction," and "third partial color blindness correction." The settings of the "first partial color blindness correction," the "second partial color blindness correction," and the "third partial color blindness correction" may differ from one another in terms of a color correction method. A user with partial color blindness may be able to select a setting suitable for himself/herself from the stated three settings. The "density" may indicate the density of a developer directed to forming an image on a print medium. The "density" may be set within a range from "-3" to "+3," for example. The "contrast" may indicate the contrast of an image to be held when an image is formed on a print medium. The "contrast" may be set within a range from "-3" to "+3," for example.

For example, in a case of a scan job, the job setting information IJ may include information on settings such as "resolution," "color correction," or "density." The "resolution" may indicate the density of pixels. The "resolution" may be set to one of, for example but not limited to, "100 dpi × 100 dpi," "200 dpi × 200 dpi," and "300 dpi × 300 dpi." The "color correction" may indicate a process of correcting colors in a case where a color image formed on a document medium is read and image data is generated. The "color correction" may include, for example, setting information for the "partial color blindness correction," as in the case of a copy job. The "density" may indicate the density of an image to be held in a case where an image formed on a document medium is read and image data is generated. The "density" may be set within a range from "-3" to "+3," for example.

For example, in a case of a FAX transmission job, the job setting information IJ may include information on settings such as "resolution," "density," or "destination specification." The "resolution" and the "density" may be similar to those in the case of a scan job. The "destination specification" may indicate a method of specifying the destination to which a FAX is transmitted. The "destination specification" may be set to one of, for example but not limited to, flag information corresponding to "speed dial code" and flag information corresponding to "FAX number direct input." The "speed dial code" may be set in a case where a destination is specified with the use of a speed dial code preset in the image processing apparatus 10. The "FAX number direct input" may be set in a case where a destination is specified by directly inputting a FAX number. In a case where the "FAX number direct input" is set in the "destination specification," the job setting information IJ may include information on the destination FAX number as well.

The controller 17 may include a RAM 17A and a job setting information transmitter-receiver 17B.

The RAM 17A may temporarily hold various pieces of information to be used when the image processing apparatus 10 operates. For example, the RAM 17A may hold the job setting information IJ generated by the controller 17.

The job setting information transmitter-receiver 17B may transmit the job setting information IJ stored in the RAM 17A to the mobile terminal 20 via the wireless network communicator 11 with the use of the wireless network communication WLAN. Further, the job setting information transmitter-receiver 17B may receive, via the wireless network communicator 11, the job setting information IJ2 transmitted by the mobile terminal 20 with the use of the wireless network communication WLAN.

### [Mobile Terminal 20]

The mobile terminal 20 may include a wireless network communicator 21, the NFC communicator 22, a telephone communicator 23, a display operating section 24, a voice input-output section 25, storage 26, and a controller 27.

The wireless network communicator 21 may perform the wireless network communication WLAN with the image processing apparatus 10 through the wireless LAN.

The NFC communicator 22 may include storage that is to hold information. The NFC communicator 22 may have information written therein or read therefrom by the NFC reader-writer 12 of the image processing apparatus 10 with the use of the near-field communication WNFC. Thus, the NFC communicator 22 may exchange information with the NFC reader-writer 12. The NFC communicator 22 may hold, for example, an identifier of the mobile terminal 20, i.e., a terminal identifier ID. This terminal identifier ID may be read by the NFC reader-writer 12 of the image processing apparatus 10 with the use of the near-field communication WNFC.

The telephone communicator 23 may perform wireless communication with a communicating party via a base station for mobile phones.

The display operating section 24 may receive a user operation and display information such as an operating state of the mobile terminal 20. The display operating section 24 may include, for example but not limited to, a touch panel, various buttons, a liquid-crystal display, and various indicators.

The voice input-output section 25 may convert a sound to an electric signal or convert an electric signal to a sound. The voice input-output section 25 may include a microphone and a speaker.

The storage 26 may include a nonvolatile memory. The storage 26 may hold the contact list CL, the user setting information IU, a risk extracting list L1, a request determining list L2, and a guidance list L3.

The contact list CL may be so-called address book data. The contact list CL may include, for example, information on one or more persons, such as a name, a telephone number, an E-mail address, or a FAX number. The contact list CL may be set, for example, to help the user to use the mobile terminal 20 more easily and may pertain to a so-called user setting.

The user setting information IU may be, for example, information set to help the user of the mobile terminal 20 to use the mobile terminal 20 more easily.

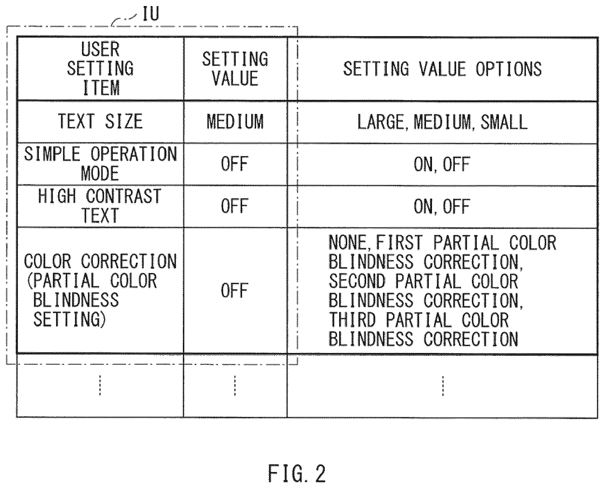

FIG. 2 illustrates an example of the user setting information IU. The user setting information IU may include, for example, setting values for various user setting items, i.e., parameters, such as "text size," "simple operation mode," "high contrast text," or "color correction (partial color blindness setting)."

The "text size" may indicate the size of text displayed on the display operating section 24 of the mobile terminal 20. In this example, the "text size" may be set to "medium." This "text size" may be set, for example, to one of "large," "medium," and "small."

The "simple operation mode" may indicate a mode that is able to provide the user with increased operability. For example, in a case where the user is an elderly person, an icon or text displayed on the display operating section 24 may be enlarged to provide the user with increased operability. In this example, the "simple operation mode" may be set to "OFF." This "simple operation mode" may be set, for example, to one of "ON" and "OFF."

The "high contrast text" may indicate a mode that is able to provide the user with increased text legibility. For example, text displayed on the display operating section 24 may be highlighted by, for example but not limited to, bordering the text to provide the user with increased text legibility. In this example, the "high contrast text" may be set to "OFF." This "high contrast text" may be set, for example, to one of "ON" and "OFF."

The "color correction (partial color blindness setting)" may indicate a setting that allows a user with partial color blindness to see a displayed image more easily by correcting the colors of the image displayed on the display operating section 24. In this example, the "color correction (partial color blindness setting)" may be set to "OFF." This "color correction (partial color blindness setting)" may be set, for example, to one of "OFF," "first partial color blindness correction," "second partial color blindness correction," and "third partial color blindness correction."

The risk extracting list L1 illustrated in FIG. 1 may include information on a relationship between an element of a risk, i.e., a risk element, that the user may face and a job setting condition that may pose such a risk.

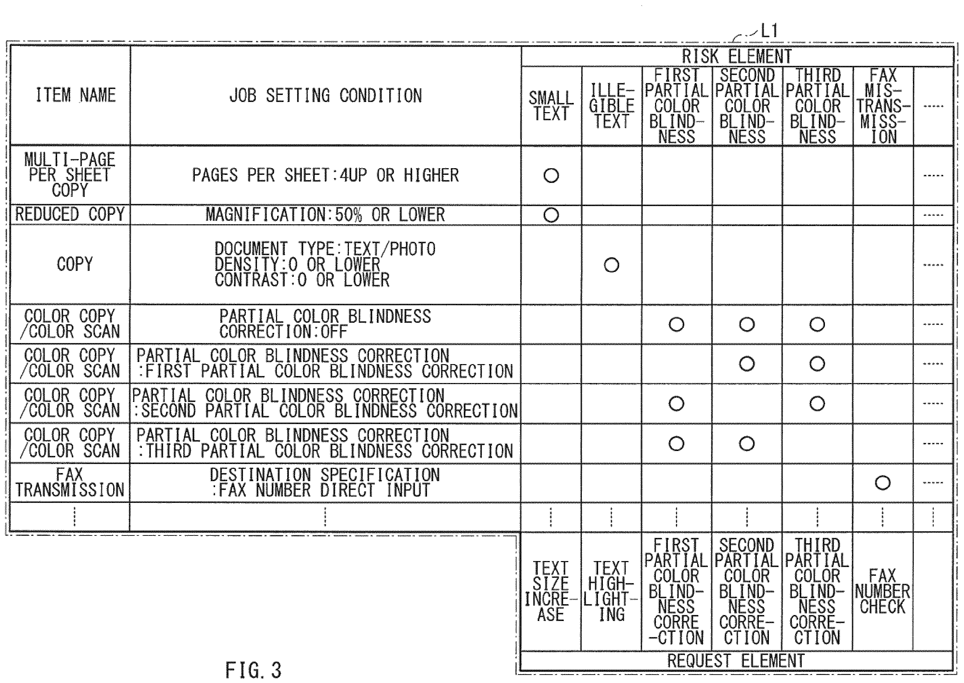

FIG. 3 illustrates an example of a configuration of the risk extracting list L1. In this example, the risk element may include various elements, such as "small text," "illegible text," "first partial color blindness," "second partial color blindness," "third partial color blindness" or "FAX mistransmission." In FIG. 3, "○ (circle)" may indicate that a given risk element and a given job setting are associated with each other.

For example, the risk element of "small text" may be associated with the "multi-page per sheet copy" in which the "pages per sheet" is set to "4UP" or higher and associated with the "reduced copy" in which the "magnification" is set to "50%" or lower. In other words, this association may indicate, for example, that the risk element of "small text" is present in a case where the "pages per sheet" is set to "4UP" or higher in the job setting when the image processing apparatus 10 is to make a "multi-page per sheet copy." In a similar manner, the above association may indicate that the risk element of "small text" is present in a case where the "magnification" is set to "50%" or lower in the job setting when the image processing apparatus 10 is to make a "reduced copy."

The risk element of "illegible text" may be associated with the "copy" in which the "document type" is set to "text/photo," the "density" is set to 0 (zero) or lower, and the "contrast" is set to 0 (zero) or lower. In other words, this association may indicate, for example, that the risk element of "illegible text" is present in a case where the "document type" is set to "text/photo," the "density" is set to 0 (zero) or lower, and the "contrast" is set to 0 (zero) or lower in the job setting when the image processing apparatus 10 is to make a "copy."

The risk element of "first partial color blindness" may be associated with: the "color copy" and the "color scan" in both of which the "partial color blindness correction" is set to "OFF;" the "color copy" and the "color scan" in both of which the "partial color blindness correction" is set to the "second partial color blindness;" and the "color copy" and the "color scan" in both of which the "partial color blindness correction" is set to the "third partial color blindness." In other words, this association may indicate, for example, that the risk element of "first partial color blindness" is present in a case where the "partial color blindness correction" is set to one of "OFF," the "second partial color blindness," and the "third partial color blindness" in the job setting when the image processing apparatus 10 is to make a "color copy." This description may apply similarly to the case of the "color scan."

The risk element of "second partial color blindness" may be associated with: the "color copy" and the "color scan" in both of which the "partial color blindness correction" is set to "OFF;" the "color copy" and the "color scan" in both of which the "partial color blindness correction" is set to the "first partial color blindness;" and the "color copy" and the "color scan" in which the "partial color blindness correction" is set to the "third partial color blindness."

The risk element of "third partial color blindness" may be associated with: the "color copy" and the "color scan" in both of which the "partial color blindness correction" is set to "OFF;" the "color copy" and the "color scan" in both of which the "partial color blindness correction" is set to the "first partial color blindness;" and the "color copy" and the "color scan" in both of which the "partial color blindness correction" is set to the "second partial color blindness."

The risk element of "FAX mistransmission" may be associated with "FAX transmission" in which the "destination specification" is set to "FAX number direct input." In other words, this association may indicate, for example, that the risk element of "FAX mistransmission" is present in a case where the "destination specification" is set to "FAX number direct input" in the job setting when the image processing apparatus 10 is to perform "FAX transmission."

These risk elements may each be associated with a request element. In other words, as illustrated in FIG. 3, the risk element of "small text" may be associated with the request element of "text size increase." The risk element of "illegible text" may be associated with the request element of "text highlighting." The risk elements of "first partial color blindness," "second partial color blindness," and "third partial color blindness" may be associated with the request elements of, respectively, "first partial color blindness correction," "second partial color blindness correction," and "third partial color blindness correction." The risk element of "FAX mistransmission" may be associated with the request element of "FAX number check."

The request determining list L2 illustrated in FIG. 1 may include information on a relationship between the aforementioned request elements and the user settings in the mobile terminal 20 in relation to which requests indicated by the request elements may arise.

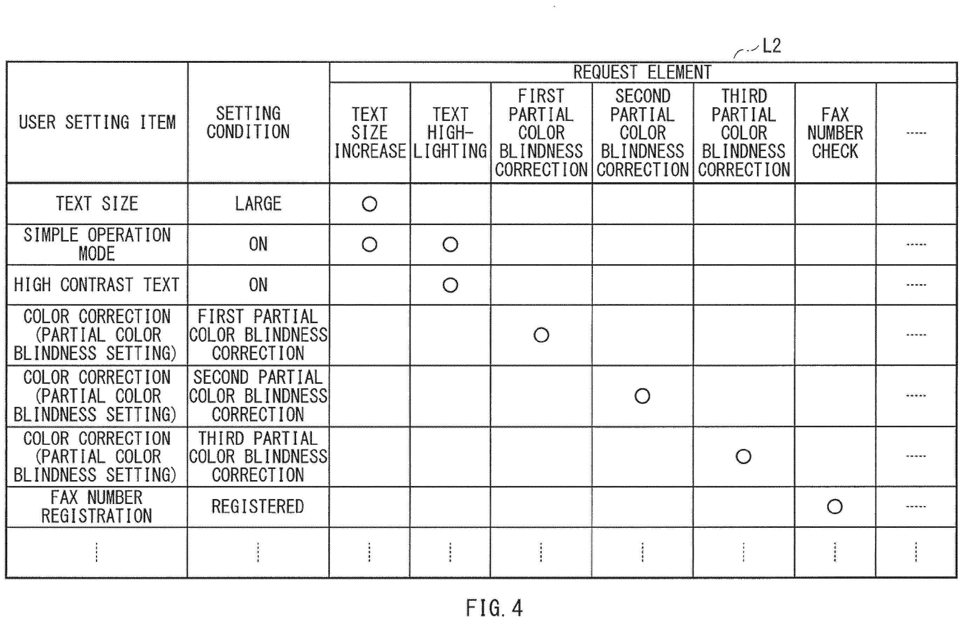

FIG. 4 illustrates an example of a configuration of the request determining list L2. In this example, the request element may include various elements, such as "text size increase," "text highlighting," "first partial color blindness correction," "second partial color blindness correction," "third partial color blindness correction," or "FAX number check." In FIG. 4, "○ (circle)" may indicate that a given request element and a given user setting are associated with each other.

For example, the request element of "text size increase" may be associated with a setting in which the "text size" in the user setting information IU is "large" and a setting in which the "simple operation mode" in the user setting information IU is "ON." In other words, this association may indicate, for example, that the request element that the text size be increased is present in a case where the "text size" is set to "large" in the user setting information IU. In a similar manner, this association may indicate that the request element that the text size be increased is present in a case where the "simple operation mode" is set to "ON" in the user setting information IU.

The request element of "text highlighting" may be associated with a setting in which the "simple operation mode" in the user setting information IU is "ON" and a setting in which the "high contrast text" in the user setting information IU is "ON." In other words, this association may indicate, for example, that the request element that the text be highlighted is present in a case where the "simple operation mode" is set to "ON" in the user setting information IU. In a similar manner, this association may indicate that the request element that the text be highlighted is present in a case where the "high contrast text" is set to "ON" in the user setting information IU.

The request element of "first partial color blindness correction" may be associated with a setting in which the "color correction (partial color blindness setting)" in the user setting information IU is the "first partial color blindness correction." In other words, this association may indicate, for example, that the request element that the first partial color blindness correction be performed is present in a case where the "color correction (partial color blindness setting)" is set to the "first partial color blindness correction" in the user setting information IU.

The request element of "second partial color blindness correction" may be associated with a setting in which the "color correction (partial color blindness setting)" in the user setting information IU is the "second partial color blindness correction."

The request element of "third partial color blindness correction" may be associated with a setting in which the "color correction (partial color blindness setting)" in the user setting information IU is the "third partial color blindness correction."

The request element of "FAX number check" may be associated with a setting in which a FAX number is "registered" in the contact list CL pertaining to the user setting. In other words, this association may indicate, for example, that the request element that the FAX number be checked is present in a case where the FAX number is registered in the contact list CL.

The guidance list L3 illustrated in FIG. 1 may include information on a relationship among the request elements, the job settings, and information to be provided to the user, i.e., the guidance information IG.

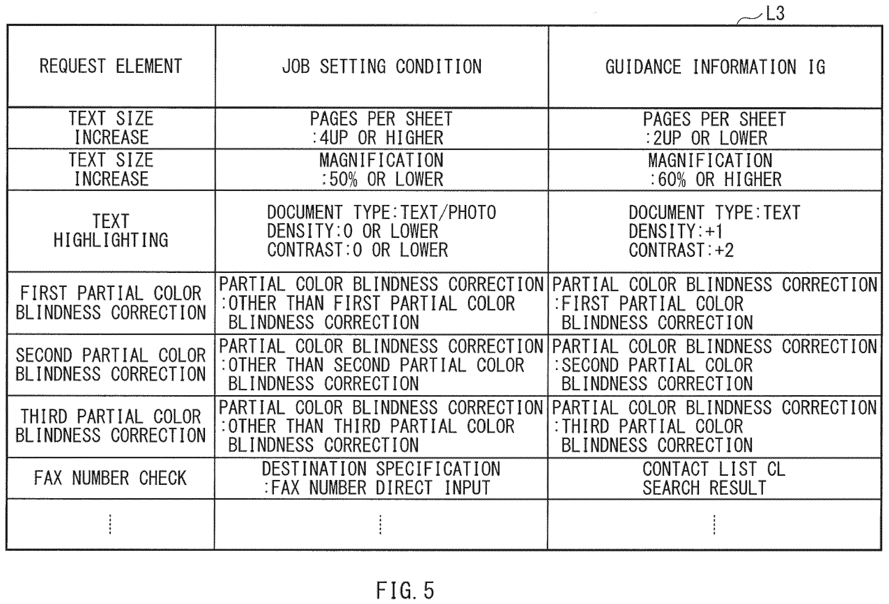

FIG. 5 illustrates an example of a configuration of the guidance list L3.

For example, the request element of "text size increase," the job setting in which the "pages per sheet" is "4UP" or higher, and the guidance information IG in which the "pages per sheet" is to be set to "2UP" or lower may be associated with one another. In other words, this association may indicate, for example, that the guidance information IG includes information indicating that the "pages per sheet" is to be set to "2UP" or lower in a case where the text size increase is requested and where the "pages per sheet" is set to "4UP" or higher in the job setting.

The request element of "text size increase," the job setting in which the "magnification" is "50%" or lower, and the guidance information IG in which the "magnification" is to be set to "60%" or higher may be associated with one another. In other words, this association may indicate, for example, that the guidance information IG includes information indicating that the "magnification" is to be set to "60%" or higher in a case where the text size increase is requested and where the "magnification" is set to "50%" or lower in the job setting.

The request element of "text highlighting," the job setting in which the "document type" is "text/photo," the "density" is "0 (zero) or lower," and the contrast is "0 (zero) or lower," and the guidance information IG in which the "document type" is to be set to "text," the "density" is to be set to "+1," and the "contrast" is to be set to "+2" may be associated with one another. In other words, this association may indicate, for example, that the guidance information IG includes information indicating that the "document type" is to be set to "text," the density" is to be set to "+1," and the "contrast" is to be set to "+2" in a case where the text highlighting is requested and where the "document type" is set to "text/photo," the density" is set to "0 (zero) or lower," and the "contrast" is set to "0 (zero) or lower" in the job setting.

The request element of performing the "first partial color blindness correction," the job setting in which the "partial color blindness correction" is other than the "first partial color blindness correction," and the guidance information IG in which the "partial color blindness correction" is to be set to the "first partial color blindness correction" may be associated with one another. In other words, this association may indicate, for example, that the guidance information IG includes information indicating that the "first partial color blindness correction" is to be performed in a case where the "first partial color blindness correction" is requested and where partial color blindness correction other than the "first partial color blindness correction" is set in the job setting.

The request element of performing the "second partial color blindness correction," the job setting in which the "partial color blindness correction" is other than the "second partial color blindness correction," and the guidance information IG in which the "partial color blindness correction" is to be set to the "second partial color blindness correction" may be associated with one another.

The request element of performing the "third partial color blindness correction," the job setting in which the "partial color blindness correction" is other than the "third partial color blindness correction," and the guidance information IG in which the "partial color blindness correction" is to be set to the "third partial color blindness correction" may be associated with one another.

The request element of "FAX number check," the job setting in which the "destination specification" is "FAX number direct input," and the guidance information IG indicating "contact list CL search result" may be associated with one another. In other words, this association may indicate, for example, that the guidance information IG includes information on a result of searching the FAX number in the contact list CL in a case where "FAX number check" is requested and where the FAX number is directly specified in the job setting condition.

The controller 27 illustrated in FIG. 1 may control an operation of the mobile terminal 20. The controller 27 may include, for example but not limited to, a CPU, a RAM, and a nonvolatile memory. The controller 27 may include a job setting information transmitter-receiver 27A and a guidance information generator 27B.

The job setting information transmitter-receiver 27A may receive, via the wireless network communicator 21, the job setting information IJ transmitted by the image processing apparatus 10 with the use of the wireless network communication WLAN. Further, the job setting information transmitter-receiver 27A may transmit the generated job setting information IJ2 to the image processing apparatus 10 via the wireless network communicator 21 with the use of the wireless network communication WLAN.

The guidance information generator 27B may generate the guidance information IG from the risk extracting list L1, the request determining list L2, and the guidance list L3 on the basis of the job setting information IJ received by the job setting information transmitter-receiver 27A, the user setting information IU, and the contact list CL.

The mobile terminal 20 may provide the user with the guidance information IG generated by the guidance information generator 27B. In a case where the user accepts a proposal indicated by the guidance information IG, the controller 27 may generate the job setting information IJ2 corresponding to the guidance information IG.

In this example, the image processing apparatus 10 may correspond to an "image processing apparatus" in one specific but non-limiting embodiment of the technology. The mobile terminal 20 may correspond to an "information processing terminal" in one specific but non-limiting embodiment of the technology. The wireless network communicator 21 may correspond to an "acquiring section" and a "supplying section" in one specific but non-limiting embodiment of the technology. The storage 26 may correspond to "storage" in one specific but non-limiting embodiment of the technology. The controller 27 may correspond to a "controller" in one specific but non-limiting embodiment of the technology. The job setting information IJ may correspond to "process setting information" in one specific but non-limiting embodiment of the technology. The user setting information IU and the contact list CL may correspond to "terminal setting information" in one specific but non-limiting embodiment of the technology.

### [Example Operation and Example Workings]

An example operation and example workings of the image processing system 1 according to the present example embodiment will now be described.

### [Overview of Overall Operation]

First, an overview of an overall operation of the image processing system 1 will be described with reference to FIG. 1. Upon the user placing the mobile terminal 20 over the NFC reader-writer 12 of the image processing apparatus 10, the image processing apparatus 10 and the mobile terminal 20 may perform the near-field communication WNFC, and the image processing apparatus 10 may authenticate the log-in. Upon successful log-in authentication, the image processing apparatus 10 and the mobile terminal 20 may establish the wireless network communication WLAN. Upon the user submitting a job by operating the image processing apparatus 10, the image processing apparatus 10 may generate information, i.e., the job setting information IJ, on the setting of the submitted job and supply this job setting information IJ to the mobile terminal 20 through the wireless network communication WLAN. On the basis of this job setting information IJ and the information on the user setting in the mobile terminal 20, i.e., the user setting information IU and the contact list CL, the mobile terminal 20 may generate the information, i.e., the guidance information IG, to be provided to the user and display this guidance information IG on the display operating section 24. For example, in a case where the user accepts a proposal indicated by this guidance information IG, the mobile terminal 20 may generate the job setting information IJ2 corresponding to the guidance information IG in accordance with a user operation. The mobile terminal 20 may supply this job setting information IJ2 to the image processing apparatus 10 through the wireless network communication WLAN. The image processing apparatus 10 may execute the submitted job on the basis of the supplied job setting information IJ2.

### [Detailed Operation]

Hereinafter, some examples of an operation of the image processing system 1 will be described with illustrating example cases where the image processing apparatus 10 performs a copy job (Cases C1 and C2), the image processing apparatus 10 performs a color copy job (Case C3), and the image processing apparatus 10 performs a FAX transmission job (Case C4).

### [Case C1]

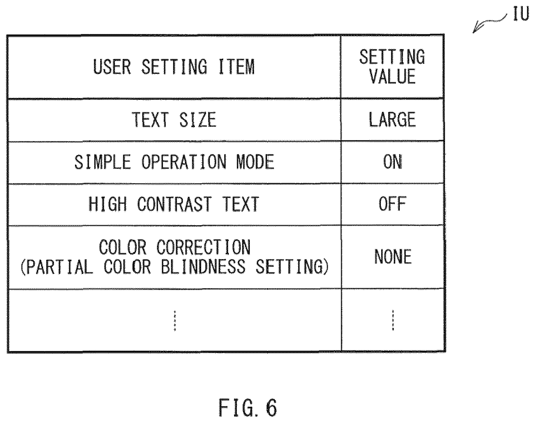

First, a case where the image processing apparatus 10 performs a copy job will be described. In this example, the user may submit a copy job in which the "pages per sheet" is "4UP" by operating the image processing apparatus 10. In this example, as illustrated in FIG. 6, the "text size" may be set to "large" and the "simple operation mode" may be set to "ON" in the user setting information IU of the mobile terminal 20.

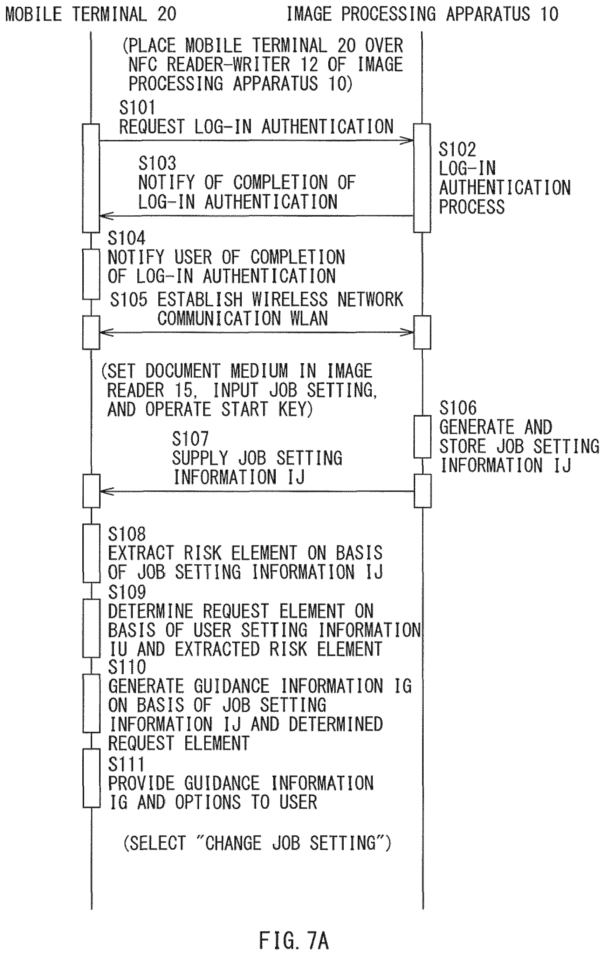

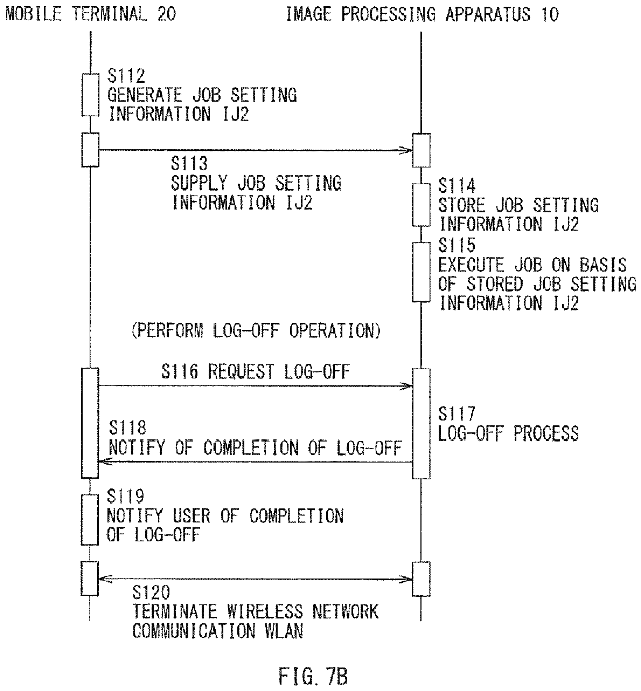

FIGs. 7A and 7B illustrate an example of an operation of the image processing system 1 to be performed in a case where the image processing apparatus 10 performs a copy job. In FIGs. 7A and 7B, user operations are indicated in parentheses.

First, upon the user placing the mobile terminal 20 over the NFC reader-writer 12 of the image processing apparatus 10, the image processing apparatus 10 and the mobile terminal 20 may perform the near-field communication WNFC with each other, and the mobile terminal 20 may request the image processing apparatus 10 for log-in authentication (step S101). Thereafter, the image processing apparatus 10 may perform a log-in authentication process (step S102). In one example, the NFC reader-writer 12 of the image processing apparatus 10 may read the terminal identifier ID stored in the NFC communicator 22 of the mobile terminal 20. With the use of this terminal identifier ID, the controller 17 may perform the log-in authentication process against an unillustrated user database. In a case where the log-in authentication is successful, the image processing apparatus 10 may notify the mobile terminal 20 of completion of the log-in authentication with the use of the near-field communication WNFC (step S103).

Thereafter, the mobile terminal 20 may notify the user of completion of the log-in authentication (step S104). In one example, the display operating section 24 of the mobile terminal 20 may, for example, provide a display indicating that the log-in authentication has been completed, and the voice input-output section 25 of the mobile terminal 20 may output voice information indicating that the log-in authentication has been completed.

Thereafter, the image processing apparatus 10 and the mobile terminal 20 may establish the wireless network communication WLAN (step S105).

Thereafter, the user may set a document medium in the image reader 15 of the image processing apparatus 10 and operate the display operating section 14. Thus, the user may input a job setting for a copy job. In this job setting, the user may set the "pages per sheet" to "4UP." Thereafter, the user may operate a start key on the display operating section 14. The controller 17 of the image processing apparatus 10 may generate the job setting information IJ on the basis of the job setting input by the user and store this job setting information IJ into the RAM 17A (step S106). This job setting information IJ may include information indicating that the submitted job is a copy job and the "pages per sheet" is "4UP."

Thereafter, the image processing apparatus 10 may supply this job setting information IJ to the mobile terminal 20 (step S107). In one example, the job setting information transmitter-receiver 17B of the image processing apparatus 10 may transmit the job setting information IJ to the mobile terminal 20 via the wireless network communicator 11 with the use of the wireless network communication WLAN. The job setting information transmitter-receiver 27A of the mobile terminal 20 may receive, via the wireless network communicator 21, the job setting information IJ transmitted by the image processing apparatus 10 with the use of the wireless network communication WLAN.

Thereafter, the guidance information generator 27B of the mobile terminal 20 may extract a risk element with the use of the risk extracting list L1 on the basis of the job setting information IJ (step S108). In one example, the guidance information generator 27B may extract a risk element with which the job setting included in the job setting information IJ is associated, with the use of the risk extracting list L1 illustrated in FIG. 3.

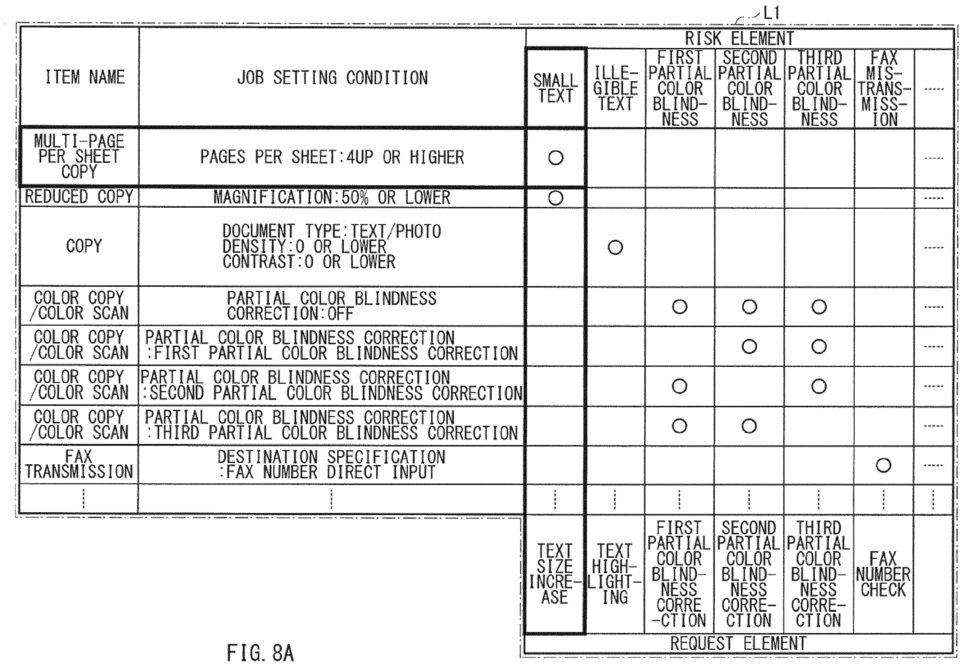

In this example, since the job setting information IJ includes information indicating that the submitted job is a copy job and the "pages per sheet" is "4UP," the guidance information generator 27B may extract the risk element of "small text," as illustrated in FIG. 8A.

In this example, the guidance information generator 27B may extract a risk element. In an alternative example, in a case where the job setting included in the job setting information IJ is not associated with any risk element in the risk extracting list L1 and where the guidance information generator 27B fails to extract a risk element, the job setting information transmitter-receiver 27A of the mobile terminal 20 may notify the image processing apparatus 10 that no change is to be made to the job setting information IJ, via the wireless network communicator 21 with the use of the wireless network communication WLAN. In this case, the image processing apparatus 10 may perform the copy job with the use of the job setting information IJ stored in the RAM 17A.

Thereafter, the guidance information generator 27B may determine a request element with the use of the request determining list L2 on the basis of the user setting information IU and the risk element extracted in step S108 (step S109). In one example, the guidance information generator 27B may first check the user setting item associated with the request element corresponding to the risk element extracted in step S108, with the use of the request determining list L2 illustrated in FIG. 4. Thereafter, the guidance information generator 27B may compare the setting value for the user setting item in the user setting information IU and the setting value (setting condition) for the user setting item in the request determining list L2. In a case where there are setting values that match each other, the guidance information generator 27B may determine that the request element with these matching setting values is the request element to be considered.

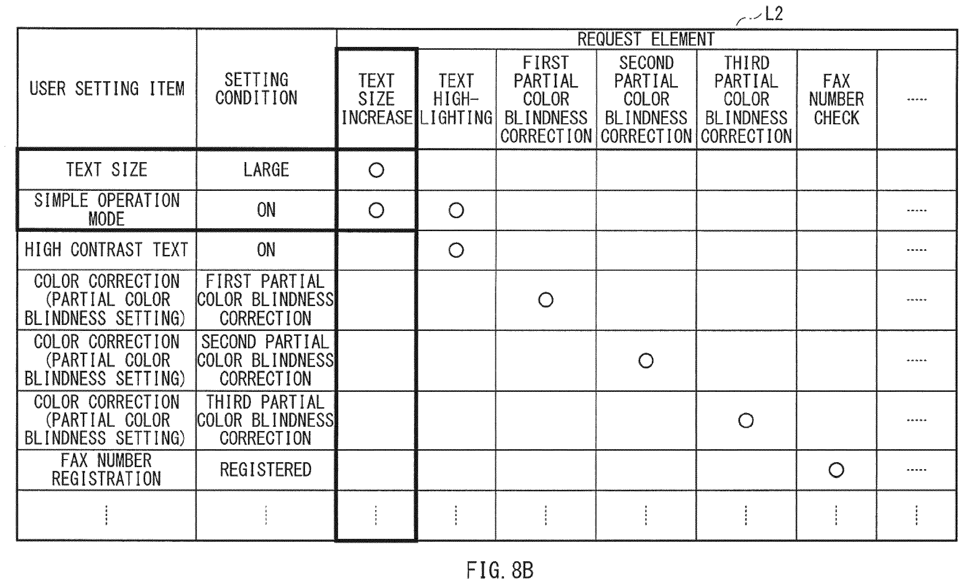

In this example, "small text" may be extracted as the risk element in step S108, and this risk element may correspond to the request element of "text size increase." Therefore, the guidance information generator 27B may confirm that the user setting items associated with the request element of "text size increase" are the "text size" and the "simple operation mode," as illustrated in FIG. 8B. In this example, in the user setting information IU illustrated in FIG. 6, the "text size" may be set to "large," and the "simple operation mode" may be set to "ON." In the request determining list L2 illustrated in FIG. 8B, the "text size" may be set to "large," and the "simple operation mode" may be set to "ON." Therefore, the setting value for the "text size" in the user setting information IU illustrated in FIG. 6 and the setting value for the "text size" in the request determining list L2 illustrated in FIG. 4 may match each other, and the setting value for the "simple operation mode" in the user setting information IU illustrated in FIG. 6 and the setting value for the "simple operation mode" in the request determining list L2 illustrated in FIG. 4 may match each other. Hence, the guidance information generator 27B may determine that the "text size increase" is the request element to be considered. In this example, the setting values for the "text size" may match each other, and the setting values for the "simple operation mode" may match each other. Alternatively, even in a case where the setting values for either one of the "text size" and the "simple operation mode" match each other, the guidance information generator 27B may determine that the "text size increase" is the request element to be considered.

In this example, the guidance information generator 27B may determine the request element to be considered. In an alternative example, in a case where there is no match between the setting values in the user setting information IU and the setting values (setting conditions) in the request determining list L2 and where the guidance information generator 27B fails to determine the request element to be considered, the job setting information transmitter-receiver 27A of the mobile terminal 20 may notify the image processing apparatus 10 that no change is to be made to the job setting information IJ, via the wireless network communicator 21 with the use of the wireless network communication WLAN. In this case, the image processing apparatus 10 may perform the copy job with the use of the job setting information IJ stored in the RAM 17A.

Thereafter, the guidance information generator 27B may generate the guidance information IG with the use of the guidance list L3 on the basis of the job setting information IJ and the request element determined in step S109 (step S110). In one example, the guidance information generator 27B may check the information on the job setting associated with the request element determined in step S109 with the use of the guidance list L3 illustrated in FIG. 5 and check whether the job setting information IJ includes information on that job setting. In a case where the job setting information IJ includes the information on the job setting associated with the request element determined in step S109, the guidance information generator 27B may determine that the guidance information IG associated with that request element in the guidance list L3 is the guidance information IG to be provided to the user.

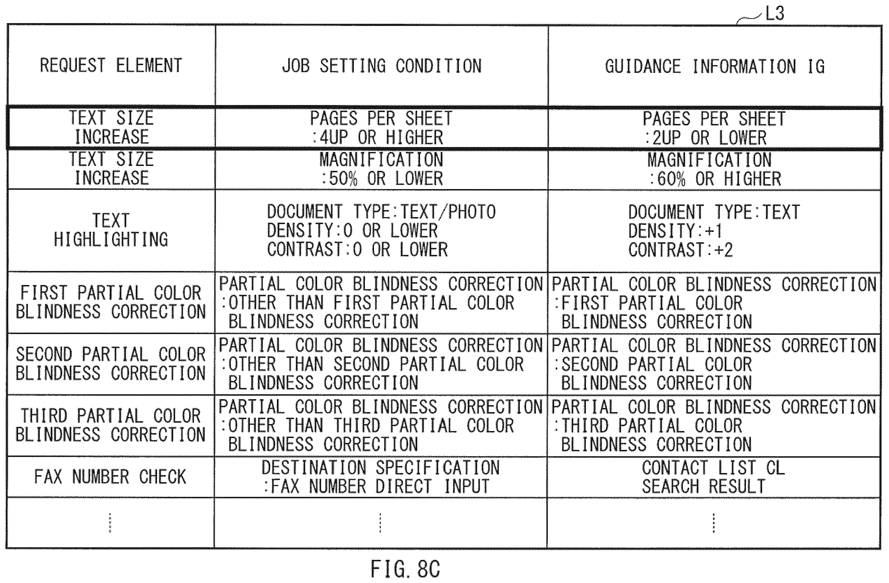

In this example, since "text size increase" is determined to be the request element in step S109, the guidance information generator 27B may confirm that this request element of "text size increase" is associated with the job setting condition in which the "pages per sheet" is "4UP" or higher and the "magnification" is "50%" or lower, as illustrated in FIG. 8C. Since the job setting information IJ includes the information indicating that the "pages per sheet" is "4UP" or higher, the guidance information generator 27B may determine that the guidance information IG indicating that the "pages per sheet" is to be set to "2UP" or lower is the guidance information IG to be provided to the user.

In this example, the guidance information generator 27B may generate the guidance information IG. In an alternative example, in a case where the job setting information IJ does not include the information on the job setting associated with the request element determined in step S109 and where the guidance information generator 27B fails to generate the guidance information IG, the job setting information transmitter-receiver 27A of the mobile terminal 20 may notify the image processing apparatus 10 that no change is to be made to the job setting information IJ, via the wireless network communicator 21 with the use of the wireless network communication WLAN. In this case, the image processing apparatus 10 may perform the copy job with the use of the job setting information IJ stored in the RAM 17A.

Thereafter, the mobile terminal 20 may provide the user with the guidance information IG and options (step Sill). In one example, the display operating section 24 of the mobile terminal 20 may, for example, display a display image 100 that provides the guidance information IG and the options, and the voice input-output section 25 of the mobile terminal 20 may, for example, output voice information corresponding to the guidance information IG.

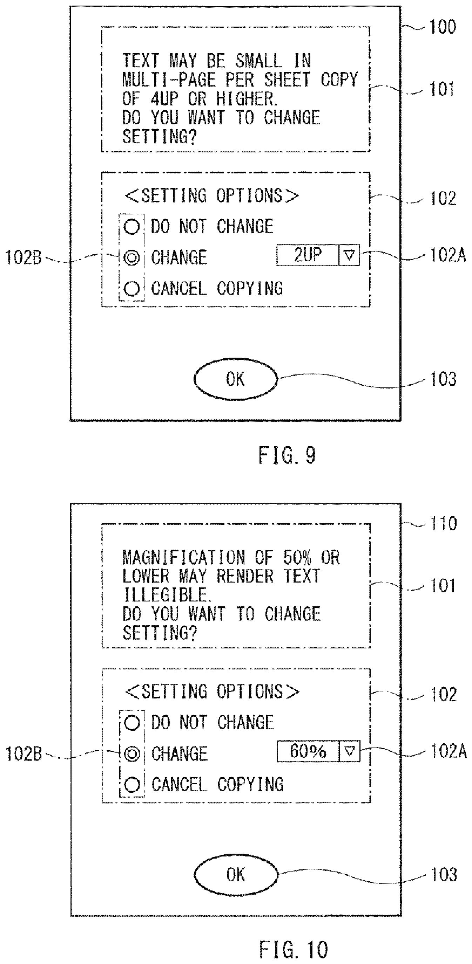

FIG. 9 illustrates an example of the display image 100 displayed by the display operating section 24 of the mobile terminal 20. The display image 100 may include a message display field 101, an option display field 102, and an "OK" button 103. In this example, the message display field 101 may display a message indicating that the text may be small in a multi-page per sheet copy of 4UP or higher. This message may correspond to the guidance information IG indicating that the "pages per sheet" is to be set to "2UP" or lower. The option display field 102 may display three options: "Do not change job setting," "Change job setting," and "Cancel copying." The option display field 102 may include a pull-down box 102A and radio buttons 102B. The user may be able to select one from a plurality of settings for the "pages per sheet" by operating the pull-down box 102A. Since the guidance information IG includes the information indicating that the "pages per sheet" is to be set to "2UP" or lower, the pull-down box 102A may have "2UP" selected and displayed therein in an initial state, for example. In this example, the pull-down box 102A may be used, but this is not a limiting example. In an alternative example, a text box may be used. The user may be able to select one of the three options by operating the radio buttons 102B. Upon the user operating the "OK" button 103, the mobile terminal 20 may perform a process corresponding to the content selected through the radio buttons 102B.

For example, in a case where "Do not change job setting" has been selected, the job setting information transmitter-receiver 27A of the mobile terminal 20 may notify the image processing apparatus 10 that no change is to be made to the job setting information IJ, via the wireless network communicator 21 with the use of the wireless network communication WLAN. In this case, the image processing apparatus 10 may perform the copy job with the use of the job setting information IJ stored in the RAM 17A. In a case where "Cancel copying" has been selected, the job setting information transmitter-receiver 27A of the mobile terminal 20 may notify the image processing apparatus 10 that the copy job is to be cancelled, via the wireless network communicator 21 with the use of the wireless network communication WLAN. In this case, the image processing apparatus 10 may delete the job setting information IJ stored in the RAM 17A, stop the copy job, and enter a standby state.

In a case where "Change job setting" has been selected, the controller 27 may generate the job setting information IJ2 on the basis of the set content of the pull-down box 102A in the display image 100 (step S112). In this example, this job setting information IJ2 may include information indicating that the submitted job is a copy job and the "pages per sheet" is "2UP."

Thereafter, the mobile terminal 20 may supply the job setting information IJ2 to the image processing apparatus 10 (step S113). In one example, the job setting information transmitter-receiver 27A may transmit the job setting information IJ2 to the image processing apparatus 10 via the wireless network communicator 21 with the use of the wireless network communication WLAN. The job setting information transmitter-receiver 17B of the image processing apparatus 10 may receive, via the wireless network communicator 11, the job setting information IJ2 transmitted by the mobile terminal 20 with the use of the wireless network communication WLAN.

Thereafter, the controller 17 of the image processing apparatus 10 may store, into the RAM 17A, the job setting information IJ2 received by the job setting information transmitter-receiver 17B (step S114). In one example, the controller 17 may replace the job setting information IJ stored in the RAM 17A in step S106 with the job setting information IJ2 received from the mobile terminal 20 in step S113.

Thereafter, the image processing apparatus 10 may execute the job on the basis of the job setting information IJ2 stored in the RAM 17A (step S115). In one example, the image reader 15 may first read an image formed on the document medium set therein and generate image data (scanned data). Thereafter, the image forming section 16 may perform an image process on the basis of the information indicating that the "pages per sheet" is "2UP" included in the job setting information IJ2. The image forming section 16 may form an image on a print medium on the basis of the image data subjected to the image process. In this manner, in this example, the image processing apparatus 10 may execute the copy job in which the "pages per sheet" is "2UP."

Thereafter, the user may, for example, perform a log-off operation by operating the display operating section 24 of the mobile terminal 20. Thus, the mobile terminal 20 may make a request to log off from the image processing apparatus 10 with the use of the wireless network communication WLAN (step S116). The image processing apparatus 10 may perform a log-off process (step S117). The image processing apparatus 10 may notify the mobile terminal 20 of completion of the log-off, with the use of the near-field communication WNFC (step S118).

In this example, the user may perform a log-off operation by operating the display operating section 24 of the mobile terminal 20, but this is not a limiting example. In an alternative example, the user may perform a log-off operation by operating the display operating section 14 of the image processing apparatus 10. In an another alternative example, the user may perform a log-off operation by placing the mobile terminal 20 over the NFC reader-writer 12 of the image processing apparatus 10. In this case, the image processing apparatus 10 may be able to notify the mobile terminal 20 of completion of the log-off, with the use of the near-field communication WNFC.

Thereafter, the mobile terminal 20 may notify the user of completion of the log-off (step S119). In one example, the display operating section 24 of the mobile terminal 20 may, for example, provide a display indicating that the log-off has been completed, and the voice input-output section 25 of the mobile terminal 20 may output voice information indicating that the log-off has been completed.

Thereafter, the image processing apparatus 10 and the mobile terminal 20 may terminate the wireless network communication WLAN (step S120).

Thus, this sequence may be terminated.

In this manner, in the image processing system 1, in a case where the "text size" is set to "large" or where the "simple operation mode" is set to "ON" in the user setting information IU of the mobile terminal 20, for example, it may be determined that the user of the mobile terminal 20 may have difficulty reading small text. Thus, the guidance information IG indicating that the "pages per sheet" is to be set to "2UP" or lower may be generated, and the user may be provided with this guidance information IG and options. With this configuration, the user may be able to have an opportunity to change the job setting before the image processing apparatus 10 finishes executing the job. This makes it possible to prevent an unnecessary execution of a job.

In this example, the user may submit a copy job in which the "pages per sheet" is "4UP" by operating the image processing apparatus 10. This example may apply similarly in a case where the user submits a copy job in which the "magnification" is "50%."

In one example, in this case, the job setting information IJ may include information indicating that the submitted job is a copy job and the "magnification" is "50%." Thus, in step S108, the guidance information generator 27B may extract the risk element of "small text." Thereafter, in step S109, the guidance information generator 27B may confirm that the user setting items associated with the request element of "text size increase" corresponding to the risk element of "small text" are the "text size" and the "simple operation mode." The setting value for the "text size" in the user setting information IU illustrated in FIG. 6 and the setting value for the "text size" in the request determining list L2 illustrated in FIG. 4 may match each other, and the setting value for the "simple operation mode" in the user setting information IU illustrated in FIG. 6 and the setting value for the "simple operation mode" in the request determining list L2 illustrated in FIG. 4 may match each other. Therefore, the guidance information generator 27B may determine that "text size increase" is the request element to be considered. Thereafter, in step S110, the guidance information generator 27B may confirm that this request element of "text size increase" is associated with the job setting condition in which the "pages per sheet" is "4UP" or higher and the "magnification" is "50%" or lower. Since the job setting information IJ includes the information indicating that the "magnification" is "50%," the guidance information generator 27B may determine that the guidance information IG indicating that the "magnification" is to be set to "60%" or higher is the guidance information IG to be provided to the user. Thereafter, the display operating section 24 of the mobile terminal 20 may display a display image 110 that provides the guidance information IG and options.

FIG. 10 illustrates an example of the display image 110. In this example, the message display field 101 may display a message indicating that text may be illegible in a case where the magnification is 50% or lower. This message may correspond to the guidance information IG indicating that the "magnification" is to be set to "60%" or higher. The option display field 102 may display three options: "Do not change job setting," "Change job setting," and "Cancel copying." Since the guidance information IG includes the information indicating that the "magnification" is to be set to "60%" or higher, the pull-down box 102A of the option display field 102 may have "60%" selected and displayed therein in an initial state, for example.

In a case where "Change job setting" has been selected, the controller 27 may generate the job setting information IJ2 including information indicating that the submitted job is a copy job and the "magnification" is "60%" (step S112). Thereafter, the mobile terminal 20 may supply the job setting information IJ2 to the image processing apparatus 10 (step S113). The image processing apparatus 10 may store this job setting information IJ2 into the RAM 17A (step S114) and execute the job on the basis of this job setting information IJ2 (step S115). Thus, the image processing apparatus 10 may execute a copy job in which the "magnification" is "60%."

In this manner, in the image processing system 1, in a case where the "text size" is set to "large" or where the "simple operation mode" is set to "ON" in the user setting information IU of the mobile terminal 20, for example, it may be determined that the user of the mobile terminal 20 may have difficulty reading small text. Thus, the guidance information IG indicating that the "magnification" is to be set to "60%" or higher may be generated, and the user may be provided with this guidance information IG and the options. With this configuration, the user may be able to have an opportunity to change the job setting before the image processing apparatus 10 finishes executing the copy job. This makes it possible to prevent an unnecessary execution of a job.

### [Case C2]

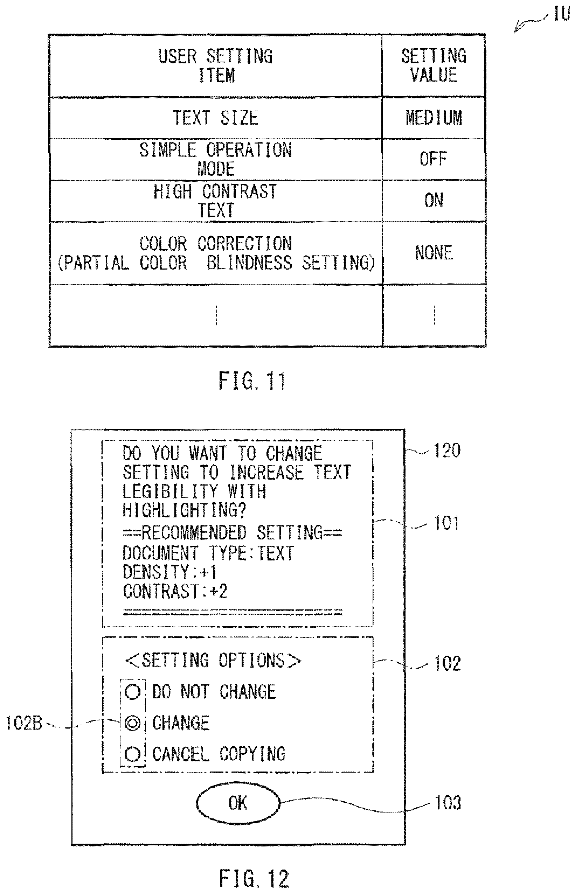

In this example, the user may submit a copy job in which the "document type" is "text/photo," the "density" is "0 (zero)," and the "contrast" is "0 (zero)" by operating the image processing apparatus 10. In the user setting information IU of the mobile terminal 20, the "high contrast text" may be set to "ON," as illustrated in FIG. 11.

As in the case of Case C1 illustrated in FIGs. 7A and 7B, the user may first place the mobile terminal 20 over the NFC reader-writer 12 of the image processing apparatus 10. Thus, the image processing apparatus 10 may perform a log-in authentication process. In a case where the log-in authentication is successful, the image processing apparatus 10 and the mobile terminal 20 may establish the wireless network communication WLAN (steps S101 to S105).

Thereafter, the user may set a document medium in the image reader 15 of the image processing apparatus 10 and operate the display operating section 14. Thus, the user may input a job setting for a copy job. In this job setting, the user may set the "document type" to "text/photo," set the "density" to "0 (zero)," and set the "contrast" to "0 (zero)." Thereafter, the user may operate a start key on the display operating section 14. The controller 17 of the image processing apparatus 10 may generate the job setting information IJ on the basis of the job setting input by the user and store this job setting information IJ into the RAM 17A (step S106). This job setting information IJ may include information indicating that the submitted job is a copy job and that the "document type" is "text/photo," the "density" is "0 (zero)," and the "contrast" is "0 (zero)." The image processing apparatus 10 may supply this job setting information IJ to the mobile terminal 20 (step S107).

Thereafter, the guidance information generator 27B of the mobile terminal 20 may extract a risk element with the use of the risk extracting list L1 illustrated in FIG. 3 on the basis of the job setting information IJ (step S108). In this example, the job setting information IJ may include the information indicating that the submitted job is a copy job and that the "document type" is "text/photo," the "density" is "0 (zero)," and the "contrast" is "0 (zero)." Therefore, the guidance information generator 27B may extract the risk element of "illegible text."

Thereafter, the guidance information generator 27B may determine a request element with the use of the request determining list L2 illustrated in FIG. 4 on the basis of the user setting information IU and the risk element extracted in step S108 (step S109). In this example, since "illegible text" is extracted as the risk element in step S108, the guidance information generator 27B may confirm that the user setting items associated with the request element of "text highlighting" corresponding to the risk element of "illegible text" are the "simple operation mode" and the "high contrast text." The setting value for the "simple operation mode" in the user setting information IU illustrated in FIG. 11 and the setting value for the "simple operation mode" in the request determining list L2 illustrated in FIG. 4 may fail to match each other, but the setting value for the "high contrast text" in the user setting information IU illustrated in FIG. 11 and the setting value for the "high contrast text" in the request determining list L2 illustrated in FIG. 4 may match each other. Hence, the guidance information generator 27B may determine that "text highlighting" is the request element to be considered.

Thereafter, the guidance information generator 27B may generate the guidance information IG with the use of the guidance list L3 illustrated in FIG. 5 on the basis of the job setting information IJ and the request element determined in step S109 (step S110). In this example, in the guidance list L3, the request element of "text highlighting" may be associated with the job setting condition in which the "document type" is "text/photo," the "density" is "0 (zero) or lower," and the "contrast" is "0 (zero) or lower." Since the job setting information IJ includes the information corresponding to this condition, the guidance information generator 27B may determine that the guidance information IG indicating that the document type" is to be set to "text," the "density" is to be set to "+1," and the "contrast" is to be set to "+2" is the guidance information IG to be provided to the user.

Thereafter, the mobile terminal 20 may provide the user with the guidance information IG and options (step Sill).

FIG. 12 illustrates an example of a display image 120. In this example, the message display field 101 may display a message proposing that the "document type" be set to "text," the "density" be set to "+1," and the "contrast" be set to "+2." This message may correspond to the guidance information IG indicating that the "document type" is to be set to "text," the "density" is to be set to "+1," and the "contrast" is to be set to "+2." The option display field 102 may display three options: "Do not change job setting," "Change job setting," and "Cancel copying."

In a case where "Change job setting" has been selected, the controller 27 may generate the job setting information IJ2 including information indicating that the submitted job is a copy job and that the "document type" is "text," the "density" is "+1," and the "contrast" is "+2" (step S112). Thereafter, the mobile terminal 20 may supply this job setting information IJ2 to the image processing apparatus 10 (step S113). The image processing apparatus 10 may store this job setting information IJ2 into the RAM 17A (step S114) and execute the job on the basis of this job setting information IJ2 (step S115). Thus, in this example, the image processing apparatus 10 may execute a copy job in which the "document type" is "text," the "density" is "+1," and the "contrast" is "+2."

Operations thereafter may be similar to those of Case C1.

In this manner, in the image processing system 1, in a case where the "simple operation mode" is set to "ON" or where the "high contrast text" is set to "ON" in the user setting information IU of the mobile terminal 20, for example, it may be determined that the user of the mobile terminal 20 may have difficulty reading unclear text. Thus, the guidance information IG indicating that the "document type" is to be set to "text," the "density" is to be set to "+1," and the "contrast" is to be set to "+2" may be generated, and the user may be provided with this guidance information IG and the options. With this configuration, the user may be able to have an opportunity to change the job setting before the image processing apparatus 10 finishes executing the copy job. This makes it possible to prevent an unnecessary execution of a job.

### [Case C3]

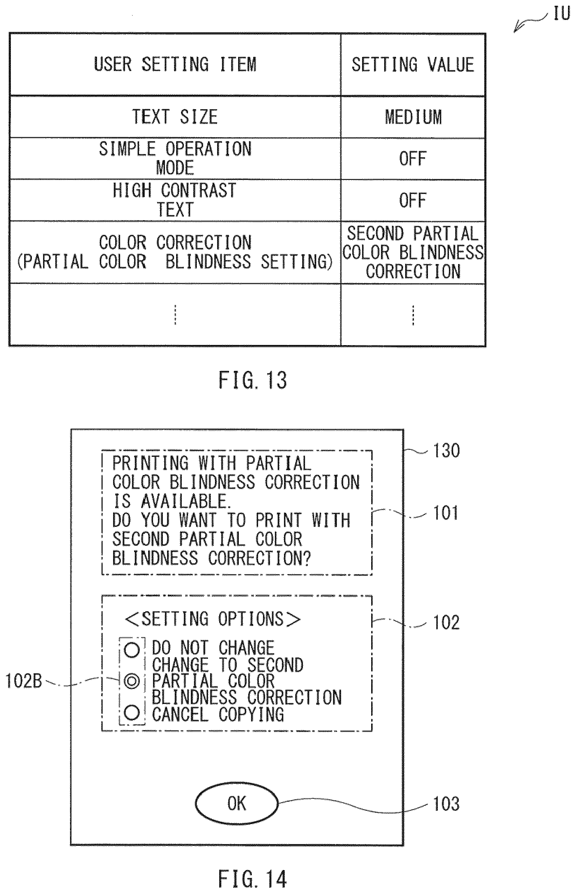

First, a case where the image processing apparatus 10 performs a color copy job will be described. In this example, the user may submit a color copy job in which the "partial color blindness correction" is "OFF" by operating the image processing apparatus 10. In the user setting information IU of the mobile terminal 20, the "color correction (partial color blindness setting)" is set to the "second partial color blindness correction," as illustrated in FIG. 13.

As in the case of Case C1 illustrated in FIGs. 7A and 7B, the user may first place the mobile terminal 20 over the NFC reader-writer 12 of the image processing apparatus 10. Thus, the image processing apparatus 10 may perform a log-in authentication process. In a case where the log-in authentication is successful, the image processing apparatus 10 and the mobile terminal 20 may establish the wireless network communication WLAN (steps S101 to S105).

Thereafter, the user may set a document medium in the image reader 15 of the image processing apparatus 10 and operate the display operating section 14. Thus, the user may input a job setting for a color copy job. In this job setting, the user may set the "partial color blindness correction" to "OFF." Thereafter, the user may operate a start key on the display operating section 14. The controller 17 of the image processing apparatus 10 may generate the job setting information IJ on the basis of the job setting input by the user and store this job setting information IJ into the RAM 17A (step S106). This job setting information IJ may include information indicating that the submitted job is a color copy job and the "partial color blindness correction" is "OFF." The image processing apparatus 10 may supply this job setting information IJ to the mobile terminal 2 0 (step S107).

Thereafter, the guidance information generator 27B of the mobile terminal 20 may extract a risk element with the use of the risk extracting list L1 illustrated in FIG. 3 on the basis of the job setting information IJ (step S108). In this example, since the job setting information IJ includes the information indicating that the submitted job is a color copy job and the "partial color blindness correction" is "OFF," the guidance information generator 27B may extract the risk elements of "first partial color blindness," "second partial color blindness," and "third partial color blindness."

Thereafter, the guidance information generator 27B may determine request elements with the use of the request determining list L2 illustrated in FIG. 4 on the basis of the user setting information IU and the risk elements extracted in step S108 (step S109). In this example, since the "first partial color blindness," the "second partial color blindness," and the "third partial color blindness" are extracted as the risk elements in step S108, the guidance information generator 27B may confirm that the user setting item associated with the request elements of "first partial color blindness correction," "second partial color blindness correction," and "third partial color blindness correction" corresponding the risk elements of "first partial color blindness," "second partial color blindness," and "third partial color blindness" is the "color correction (partial color blindness setting)." The setting value of the "second partial color blindness correction" for the "color correction (partial color blindness setting)" in the user setting information IU illustrated in FIG. 13 may match the setting value of the "second partial color blindness correction" for the "color correction (partial color blindness setting)" in the request determining list L2 illustrated in FIG. 4. Hence, the guidance information generator 27B may determine that the "second partial color blindness correction" is the request element to be considered.

Thereafter, the guidance information generator 27B may generate the guidance information IG with the use of the guidance list L3 illustrated in FIG. 5 on the basis of the job setting information IJ and the request element determined in step S109 (step S110). In this example, in the guidance list L3, the request element of "second partial color blindness correction" may be associated with the job setting condition in which the "partial color blindness correction" is other than the "second partial color blindness correction." Since the job setting information IJ includes the information indicating that the "partial color blindness correction" is "OFF," the guidance information generator 27B may determine that the guidance information IG indicating that the "partial color blindness correction" is to be set to the "second partial color blindness correction" is the guidance information IG to be provided to the user.

Thereafter, the mobile terminal 20 may provide the user with the guidance information IG and options (step Sill).

FIG. 14 illustrates an example of a display image 130. In this example, the message display field 101 may display a message indicating that printing with partial color blindness correction is available and proposing that printing be performed with the second partial color blindness correction. This message may correspond to the guidance information IG indicating that the "partial color blindness correction" is to be set to the "second partial color blindness correction." The option display field 102 may display three options: "Do not change job setting," "Change to second partial color blindness correction," and "Cancel copying."

In a case where "Change to second partial color blindness correction" has been selected, the controller 27 may generate the job setting information IJ2 including information indicating that the submitted job is a color copy job and the "partial color blindness correction" is the "second partial color blindness correction" (step S112). Thereafter, the mobile terminal 20 may supply this job setting information IJ2 to the image processing apparatus 10 (step S113). The image processing apparatus 10 may store this job setting information IJ2 into the RAM 17A (step S114) and execute the job on the basis of this job setting information IJ2 (step S115). Thus, in this example, the image processing apparatus 10 may execute a color copy job in which the "partial color blindness correction" is the "second partial color blindness correction."

Operations thereafter may be similar to those of Case C1.

In this manner, in the image processing system 1, in a case where the "color correction (partial color blindness setting)" is set to the "second partial color blindness correction" in the user setting information IU of the mobile terminal 20, for example, it may be determined that the user of the mobile terminal 20 may have difficulty perceiving colors. Thus, the guidance information IG indicating that the "partial color blindness correction" is to be set to the "second partial color blindness correction" may be generated, and the user may be provided with this guidance information IG and the options. With this configuration, the user may be able to have an opportunity to change the job setting before the image processing apparatus 10 finishes executing the color copy job. This makes it possible to prevent an unnecessary execution of a job.

In this example, a case of a color copy job has been described as an example. This example may apply similarly to a color scan job, for example.

### [Case C4]

First, a case where the image processing apparatus 10 performs a FAX transmission job will be described. In this example, the user may submit a FAX transmission job by operating the image processing apparatus 10 to directly input a destination FAX number. A FAX number that has been directly input to the image processing apparatus 10 may be registered in the contact list CL of the mobile terminal 20.

As in the case of Case C1 illustrated in FIGs. 7A and 7B, the user may first place the mobile terminal 20 over the NFC reader-writer 12 of the image processing apparatus 10. Thus, the image processing apparatus 10 may perform a log-in authentication process. In a case where the log-in authentication is successful, the image processing apparatus 10 and the mobile terminal 20 may establish the wireless network communication WLAN (steps S101 to S105).

Thereafter, the user may set a document medium in the image reader 15 of the image processing apparatus 10 and operate the display operating section 14. Thus, the user may input a job setting for a FAX transmission job. In this job setting, the user may directly input a destination FAX number. Thereafter, the user may operate a start key on the display operating section 14. The controller 17 of the image processing apparatus 10 may generate the job setting information IJ on the basis of the job setting input by the user and store this job setting information IJ into the RAM 17A (step S106). This job setting information IJ may include information indicating that the submitted job is a FAX transmission job, flag information indicating "FAX number direct input," and information on the destination FAX number. The image processing apparatus 10 may supply this job setting information IJ to the mobile terminal 20 (step S107).

Thereafter, the guidance information generator 27B of the mobile terminal 20 may extract a risk element with the use of the risk extracting list L1 illustrated in FIG. 3 on the basis of the job setting information IJ (step S108). In this example, since the job setting information IJ includes the information indicating that the submitted job is a FAX transmission job and the flag information indicating "FAX number direct input," the guidance information generator 27B may extract the risk element of "FAX mistransmission. "

Thereafter, the guidance information generator 27B may determine a request element with the use of the request determining list L2 illustrated in FIG. 4 on the basis of the contact list CL and the risk element extracted in step S108 (step S109). In this example, since "FAX mistransmission" is extracted as the risk element in step S108, the guidance information generator 27B may confirm that the user setting item associated with the request element of "FAX number check" corresponding to the risk element of "FAX mistransmission" is "FAX number registration." The guidance information generator 27B may check whether the destination FAX number included in the job setting information IJ is registered in the contact list CL. In this example, the destination FAX number may be "registered" in the contact list CL, and the result of this check may be identical to the setting value for the "FAX number registration" in the request determining list L2. Hence, the guidance information generator 27B may determine that the "FAX number check" is the request element to be considered.

Thereafter, the guidance information generator 27B may generate the guidance information IG with the use of the guidance list L3 illustrated in FIG. 5 on the basis of the contact list CL and the request element determined in step S109 (step S110). In this example, in the guidance list L3, the request element of "FAX number check" may be associated with the job setting condition in which the "destination specification" is "FAX number direct input." Since the job setting information IJ includes the flag information indicating "FAX number direct input," the guidance information generator 27B may determine that the result of searching the contact list CL is the guidance information IG to be provided to the user.

Thereafter, the mobile terminal 20 may provide the user with the guidance information IG and options (step Sill).

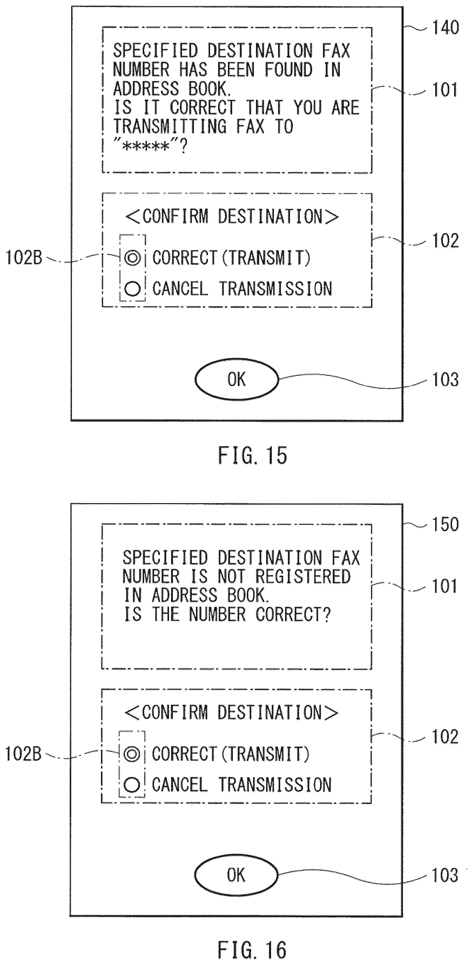

FIG. 15 illustrates an example of a display image 140. In this example, the message display field 101 may display a message indicating that the destination FAX number is registered in the contact list CL. The message display field 101 may also display the name of the destination corresponding to the FAX number registered in the contact list CL and display a message prompting the user to confirm whether the destination is correct. These messages may correspond to the guidance information IG indicating the result of searching the contact list CL. The option display field 102 may display two options: "Correct" and "Cancel FAX transmission."

In this example, the destination FAX number may be registered in the contact list CL of the mobile terminal 20. In an alternative example, in a case where the destination FAX number is not registered, as illustrated in FIG. 16, in this example, the message display field 101 may display a message indicating that the destination FAX number is not registered in the contact list CL and also display a message prompting the user to confirm whether the destination is correct. These messages may correspond to the guidance information IG indicating the result of searching the contact list CL. The option display field 102 may display two options: "Correct" and "Cancel FAX transmission." This, however, is not a limiting example, and for example, the user may select a FAX number from the contact list CL of the mobile terminal 20.

For example, in a case where "Correct" has been selected, the job setting information transmitter-receiver 27A of the mobile terminal 20 may notify the image processing apparatus 10 that no change is to be made to the job setting information IJ, via the wireless network communicator 21 with the use of the wireless network communication WLAN. In this case, the image processing apparatus 10 may perform the FAX transmission job with the use of the job setting information IJ stored in the RAM 17A. In a case where "Cancel FAX transmission" has been selected, the job setting information transmitter-receiver 27A of the mobile terminal 20 may notify the image processing apparatus 10 that the FAX transmission job is to be cancelled, via the wireless network communicator 21 with the use of the wireless network communication WLAN. In this case, the image processing apparatus 10 may delete the job setting information IJ stored in the RAM 17A, stop the FAX transmission job, and enter a standby state.

In this manner, in the image processing system 1, in a case where the FAX number directly input to the image processing apparatus 10 is registered in the contact list CL of the mobile terminal 20, it may be determined that there is a possibility that the destination FAX number is not correct. Thus, the guidance information IG indicating the result of searching the FAX number through the contact list CL may be generated, and the user may be provided with this guidance information IG and the options. With this configuration, the user may be able to have an opportunity to change the job setting before the image processing apparatus 10 finishes executing the FAX transmission job. This makes it possible to prevent an unnecessary execution of a job.

As described thus far, in the image processing system 1, the guidance information IG and the options may be generated on the basis of the job setting information IJ and the information, i.e., the user setting information IU and the contact list CL, on the user setting in the mobile terminal 20. Thus, in the image processing system 1, for example, even in a case where the user is not very familiar with the relationship between the job setting and the output result of the image processing apparatus 10, the user may be able to obtain information on what the output result of the image processing apparatus 10 will be on the basis of the guidance information IG. Since the user is able to select a setting for obtaining a better output result through the options, for example, it may be unnecessary for the user to actually check the output result of the image processing apparatus 10 and to resubmit a job for obtaining a better output result. Accordingly, it is possible to save the user from an extra operation. As a result, it is possible to increase the user-friendliness in the image processing system 1.

### [Example Effects]

In the present example embodiment described thus far, the guidance information and the options may be generated on the basis of the job setting information and the information on the user setting in the mobile terminal. Thus, it is possible to increase the user-friendliness.

### [Modification Example 1-1]

In the foregoing example embodiment, the display operating section 24 of the mobile terminal 20 may display the guidance information IG and the options. This, however, is not a limiting example. In an alternative example, the mobile terminal 20 may, for example, supply the generated guidance information IG to the image processing apparatus 10, and the display operating section 14 of the image processing apparatus 10 may display the guidance information IG and the options. In this case, the user may, for example, be able to select one of the options by operating the display operating section 14 of the image processing apparatus 10.

### [Modification Example 1-2]

In the foregoing example embodiment, the mobile terminal 20 may generate the guidance information IG with the use of the risk extracting list L1, the request determining list L2, and the guidance list L3. This, however, is not a limiting example. In an alternative example, storage may be provided in the image processing apparatus 10, for example, and this storage may hold the risk extracting list L1, the request determining list L2, and the guidance list L3. Thus, the image processing apparatus 10 may generate the guidance information IG with the use of the risk extracting list L1, the request determining list L2, and the guidance list L3 stored in the storage. In this case, the mobile terminal 20 may supply the user setting information IU and the contact list CL to the image processing apparatus 10, and the image processing apparatus 10 may generate the guidance information IG on the basis of the job setting information IJ, the user setting information IU, and the contact list CL.

The above is not a limiting example, and the mobile terminal 20 and the image processing apparatus 10 may generate the guidance information IG together and divide the generation of the guidance information IG between the image processing apparatus 10 and the mobile terminal 20. In one example, the mobile terminal 20 may, for example, extract a risk element and determine a request element with the use of the risk extracting list L1 and the request determining list L2 on the basis of the job setting information IJ, the user setting information IU, and the contact list CL, and the image processing apparatus 10 may generate the guidance information IG with the use of the guidance list L3 on the basis of the job setting information IJ. In this case, the storage 26 of the mobile terminal 20 may hold the risk extracting list L1 and the request determining list L2, and the storage of the image processing apparatus 10 may hold the guidance list L3.

### [Modification Example 1-3]

In the foregoing example embodiment, the guidance information generator 27B may generate the guidance information IG with the use of the risk extracting list L1, the request determining list L2, and the guidance list L3 on the basis of the job setting information IJ, the user setting information IU, and the contact list CL. This, however, is not a limiting example. It is possible to employ a variety of methods of generating the guidance information IG on the basis of the job setting information IJ and the information on the user setting in the mobile terminal 20.

### [Modification Example 1-4]

In the foregoing example embodiment, the guidance information IG may be generated in a case where a copy process is to be performed. This, however, is not a limiting example. In an alternative example, the guidance information IG may not be generated, for example, in a case where the "number of copies" is set to "2" or higher in the job setting information IJ in a copy process. Hereinafter, an image processing system 1A according to this modification example will be described in detail.

The image processing system 1A may include an image processing apparatus 10A and a mobile terminal 20. In a case where the "number of copies" is set to "2" or higher in the job setting information IJ, the image processing apparatus 10A may refrain from supplying the job setting information IJ to the mobile terminal 20 and execute the job on the basis of the job setting information IJ.

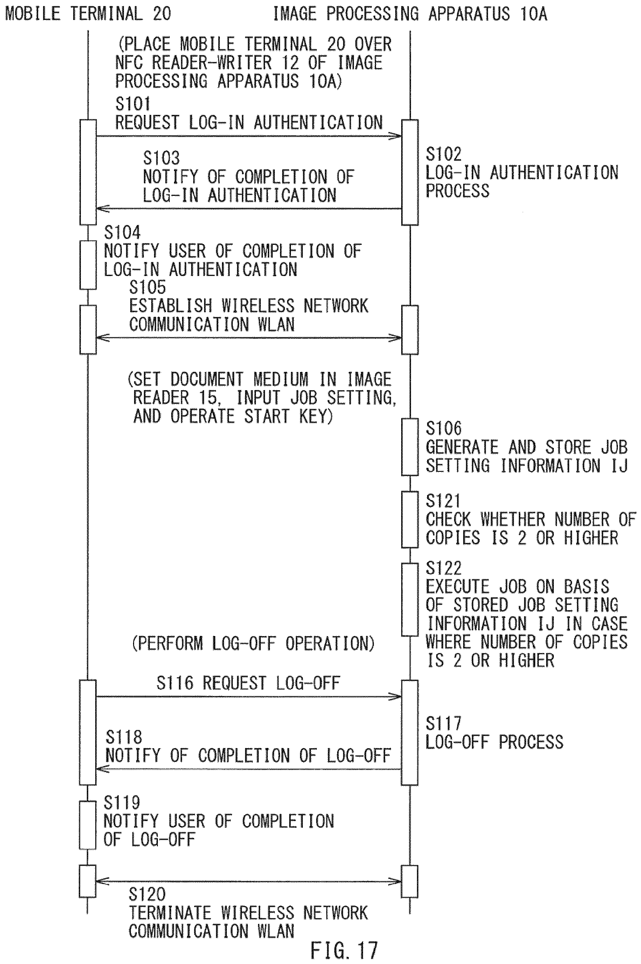

FIG. 17 illustrates an example of an operation of the image processing system 1A. As in the case of the foregoing example embodiment, the user may first place the mobile terminal 20 over the NFC reader-writer 12 of the image processing apparatus 10A. Thus, the image processing apparatus 10A may perform a log-in authentication process. In a case where the log-in authentication is successful, the image processing apparatus 10A and the mobile terminal 20 may establish the wireless network communication WLAN (steps S101 to S105).

Thereafter, the user may set a document medium in the image reader 15 of the image processing apparatus 10A and operate the display operating section 14. Thus, the user may input a job setting for a copy job and operate a start key. The controller 17 of the image processing apparatus 10A may generate the job setting information IJ on the basis of the job setting input by the user and store this job setting information IJ into the RAM 17A (step S106).

Thereafter, the controller 17 of the image processing apparatus 10A may check whether the "number of copies" is set to "2" or higher in the job setting information IJ (step S121). In a case where the "number of copies" is "1," as in the case of the foregoing example embodiment illustrated in FIGs. 7A and 7B, the image processing apparatus 10A may supply the job setting information IJ to the mobile terminal 20 (step S107), and the mobile terminal 20 may generate the guidance information IG on the basis of this job setting information IJ and supply this guidance information IG and options to the user (steps S108 to S111). The flow thereafter may be similar to that of the foregoing example embodiment.

In contrast, in a case where the "number of copies" is "2" or higher, the controller 17 of the image processing apparatus 10A may execute the job on the basis of the job setting information IJ stored in the RAM 17A (step S122). In other words, in a case where the "number of copies" is "2" or higher, the controller 17 may determine that the purpose of this copy job is not to make a duplicate copy of a document for personal use but to make duplicate copies of a document to be distributed to a number of people. Thus, the controller 17 may refrain from generating the guidance information IG and execute the job on the basis of the job setting information IJ. Thereafter, a log-off process may be performed on the basis of the user's log-off operation, and the image processing apparatus 10A and the mobile terminal 20 may terminate the wireless network communication WLAN (steps S116 to S120).

In this example, in a case where the "number of copies" is set to "2" or higher, the job setting information IJ may not be supplied to the mobile terminal 20. This, however, is not a limiting example. In an alternative example, as in the case of the foregoing example embodiment illustrated in FIG. 7A, for example, the image processing apparatus 10 may supply the job setting information IJ to the mobile terminal 20. In this case, for example, in a case where the "number of copies" is set to "2" or higher, the mobile terminal 20 may refrain from generating the guidance information IG on the basis of the job setting information IJ supplied from the image processing apparatus 10 and notify the image processing apparatus 10 that no change is to be made to the job setting information IJ. In this case, the image processing apparatus 10 may perform the copy job with the use of the job setting information IJ stored in the RAM 17A.

In a case where the "number of copies" is set to "2" or higher, the copy job may be executed on the basis of the job setting information IJ2 only for one of the plurality of copies, and the copy job may be executed on the basis of the job setting information IJ for the remaining copies. In other words, in a case where the "number of copies" is set to "2" or higher, the purpose of the copy job may be to make duplicate copies of a document to be distributed to a number of people, but one of the copies may be the document for the user. Therefore, in this example, the image processing apparatus 10 may execute the copy job on the basis of the job setting information IJ2 only for one of the plurality of copies.

### [Other Modification Examples]

Two or more of the foregoing modification examples may be combined.

### [2. Second Example Embodiment]

An image processing system 2 according to a second example embodiment will now be described. In the present example embodiment, an image may be formed on the basis of print data DP pre-stored in an image processing apparatus. Components that are substantially identical to those of the image processing system 1 according to the foregoing first example embodiment will be given identical reference characters, and descriptions thereof will be omitted as appropriate.

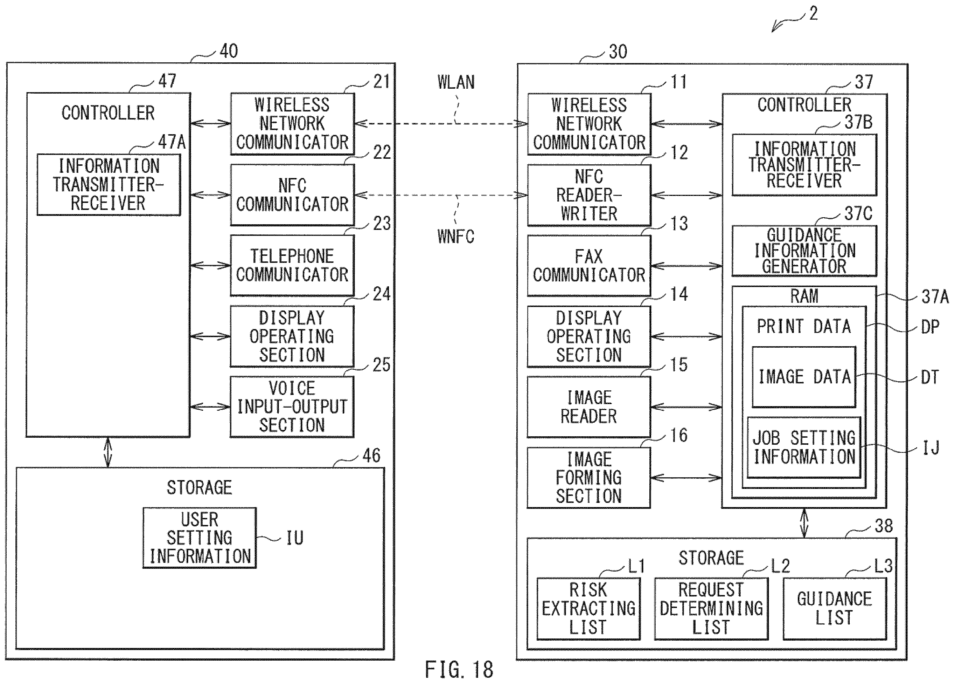

FIG. 18 illustrates an example of a configuration of the image processing system 2 according to the present example embodiment. The image processing system 2 may include an image processing apparatus 30 and a mobile terminal 40.

The image processing apparatus 30 may include storage 38 and a controller 37. The storage 38 may hold the risk extracting list L1, the request determining list L2, and the guidance list L3. The controller 37 may include a RAM 37A, an information transmitter-receiver 37B, and a guidance information generator 37C.

The RAM 37A may hold one or more pieces of print data DP. The print data DP may be supplied, for example, from an unillustrated personal computer to the image processing apparatus 30 and stored in the RAM 37A. Each piece of the print data DP may include image data DT and the job setting information IJ. The image data DT may be information on an image to be printed. The RAM 37A may also hold information on an unillustrated job list JL indicating a list of jobs to be executed in the image processing apparatus 30.

The information transmitter-receiver 37B may receive, via the wireless network communicator 11, the user setting information IU transmitted by the mobile terminal 40 with the use of the wireless network communication WLAN. Further, the information transmitter-receiver 37B may transmit the guidance information IG generated by the guidance information generator 37C and the job setting information IJ included in the print data DP to the mobile terminal 40 via the wireless network communicator 11 with the use of the wireless network communication WLAN.

The guidance information generator 37C may generate the guidance information IG with the use of the risk extracting list L1, the request determining list L2, and the guidance list L3 on the basis of the job setting information IJ included in the print data DP and the user setting information IU received by the information transmitter-receiver 37B.

The mobile terminal 40 may include storage 46 and a controller 47. The storage 46 may hold the user setting information IU. The controller 47 may include an information transmitter-receiver 47A. The information transmitter-receiver 47A may transmit the user setting information IU stored in the storage 46 and the job setting information IJ2 generated by the controller 47 to the image processing apparatus 30 via the wireless network communicator 21 with the use of the wireless network communication WLAN. Further, the information transmitter-receiver 47A may receive, via the wireless network communicator 21, the guidance information IG and the job setting information IJ transmitted by the image processing apparatus 30 with the use of the wireless network communication WLAN.

In this example, the image processing apparatus 30 may correspond to the "image processing apparatus" in one specific but non-limiting embodiment of the technology. The wireless network communicator 11 may correspond to the "communicator" in one specific but non-limiting embodiment of the technology. The image reader 15 and the image forming section 16 may correspond to the "image processing section" in one specific but non-limiting embodiment of the technology. The controller 37 may correspond to the "controller" in one specific but non-limiting embodiment of the technology. The mobile terminal 40 may correspond to the "information processing terminal" in one specific but non-limiting embodiment of the technology.

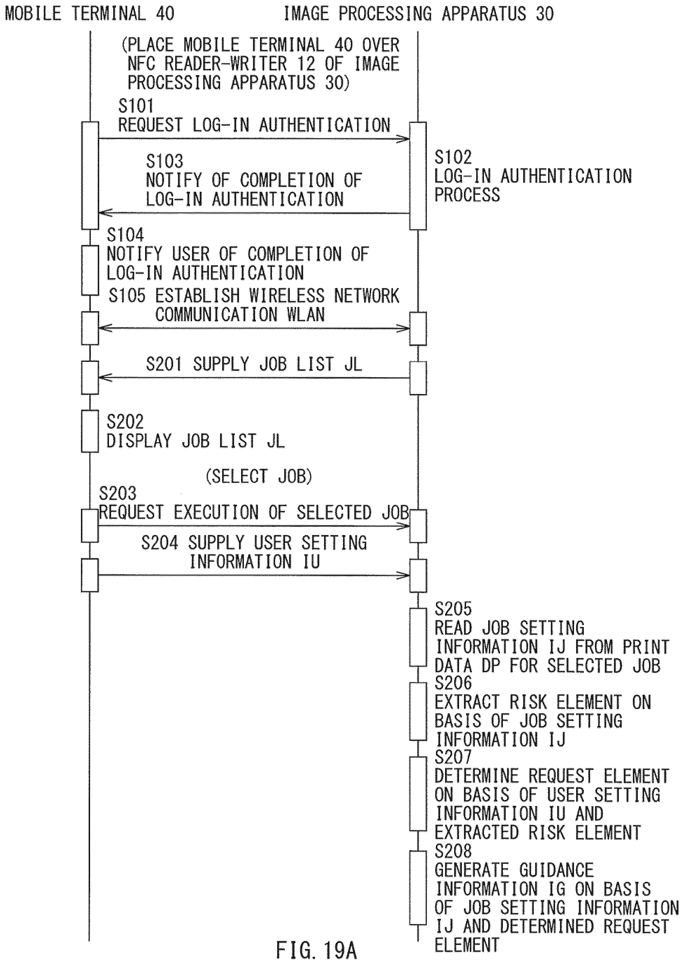

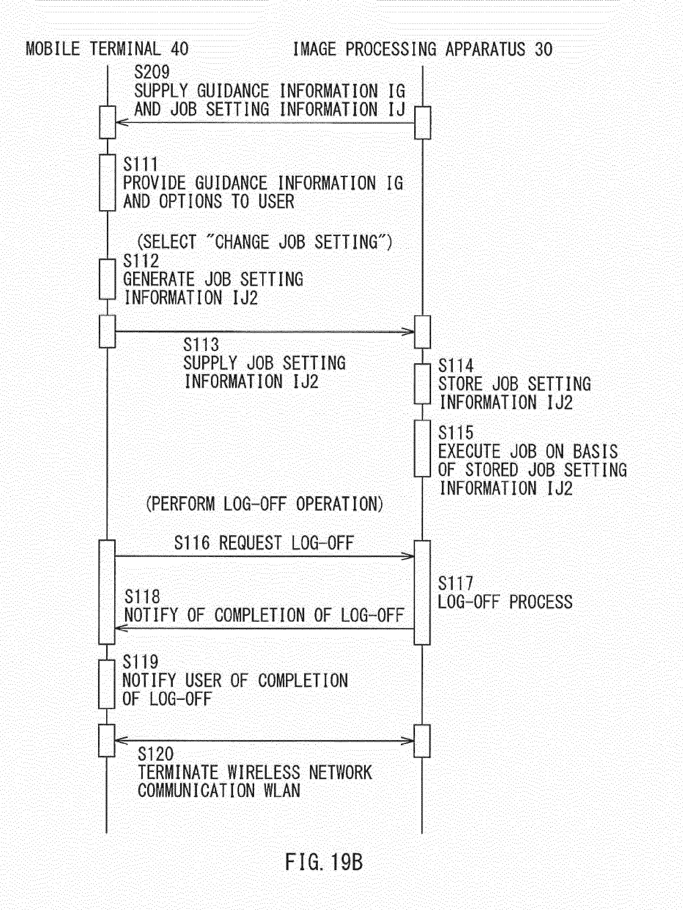

FIGs. 19A and 19B illustrate an example of an operation of the image processing system 2. As in the case of the image processing system 1 according to the foregoing first example embodiment illustrated in FIGs. 7A and 7B, the user may first place the mobile terminal 40 over the NFC reader-writer 12 of the image processing apparatus 30. Thus, the image processing apparatus 30 may perform a log-in authentication process. In a case where the log-in authentication is successful, the image processing apparatus 30 and the mobile terminal 40 may establish the wireless network communication WLAN (steps S101 to S105).

Thereafter, the image processing apparatus 30 may supply the job list JL to the mobile terminal 40 (step S201). In one example, the information transmitter-receiver 37B of the image processing apparatus 30 may transmit the job list JL to the mobile terminal 40 via the wireless network communicator 11 with the use of the wireless network communication WLAN. The information transmitter-receiver 47A of the mobile terminal 40 may receive, via the wireless network communicator 21, the job list JL transmitted by the image processing apparatus 30 with the use of the wireless network communication WLAN.

Thereafter, the display operating section 24 of the mobile terminal 40 may display the job list JL (step S202). The user may select a job to be processed from this job list JL.

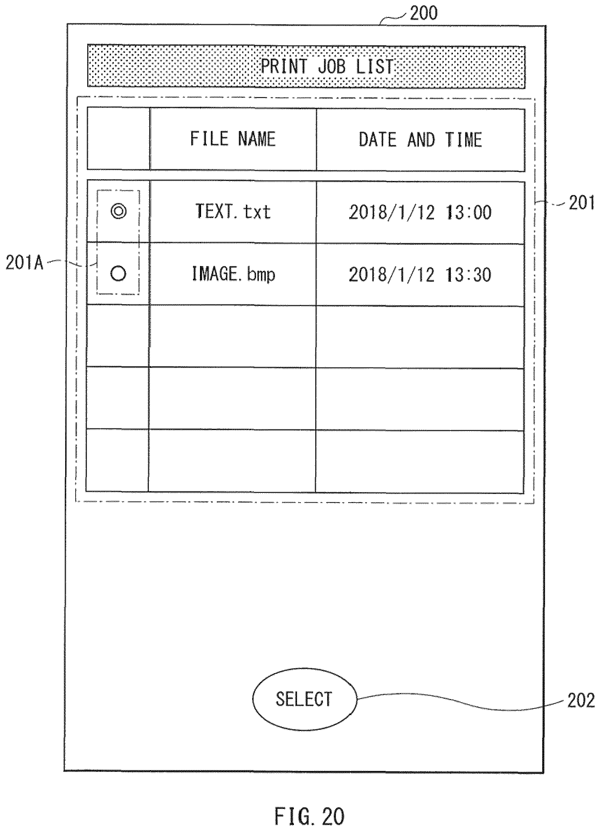

FIG. 20 illustrates an example of a display image 200 displayed by the display operating section 24 of the mobile terminal 40. The display image 200 may include a job list display field 201 and a "SELECT" button 202. In this example, the job list display field 201 may display a list of print jobs and display information on the file name of each job and the date and time when each job is submitted. The user may be able to select one of the jobs by operating radio buttons 201A. Upon the user operating the "SELECT" button 202, the mobile terminal 40 may select the job selected by the radio button 201A as a job to be processed.

Thereafter, the mobile terminal 40 may request the image processing apparatus 30 to execute the selected job (step S203). In one example, the information transmitter-receiver 47A of the mobile terminal 40 may request the image processing apparatus 30 to execute the job via the wireless network communicator 21 with the use of the wireless network communication WLAN. The information transmitter-receiver 37B of the image processing apparatus 30 may receive, via the wireless network communicator 11, this request to execute the job transmitted by the mobile terminal 40 with the use of the wireless network communication WLAN.

Thereafter, the mobile terminal 40 may supply the user setting information IU to the image processing apparatus 30 (step S204). In one example, the information transmitter-receiver 47A of the mobile terminal 40 may transmit the user setting information IU to the image processing apparatus 30 via the wireless network communicator 21 with the use of the wireless network communication WLAN. The information transmitter-receiver 37B of the image processing apparatus 30 may receive, via the wireless network communicator 11, the user setting information IU transmitted by the mobile terminal 40 with the use of the wireless network communication WLAN.

Thereafter, the controller 37 of the image processing apparatus 30 may read the job setting information IJ included in the print data DP for the selected job on the basis of the request, to execute the job, received in step S203 (step S205).

Thereafter, as in the case of the foregoing first example embodiment (in steps S108 to S110 of FIG. 7A), the guidance information generator 37C of the image processing apparatus 30 may extract a risk element with the use of the risk extracting list L1 on the basis of the job setting information IJ (step S206). The guidance information generator 37C of the image processing apparatus 30 may determine a request element with the use of the request determining list L2 on the basis of the user setting information IU and the risk element extracted in step S206 (step S207). Further, the guidance information generator 37C of the image processing apparatus 30 may generate the guidance information IG with the use of the guidance list L3 on the basis of the job setting information IJ and the request element determined in step S207 (step S208).

Thereafter, the image processing apparatus 30 may supply the guidance information IG and the job setting information IJ to the mobile terminal 40 (step S209). In one example, the information transmitter-receiver 37B of the image processing apparatus 30 may transmit the guidance information IG and the job setting information IJ to the mobile terminal 40 via the wireless network communicator 11 with the use of the wireless network communication WLAN. The information transmitter-receiver 47A of the mobile terminal 40 may receive, via the wireless network communicator 21, the guidance information IG and the job setting information IJ transmitted by the image processing apparatus 30 with the use of the wireless network communication WLAN.

Thereafter, the mobile terminal 40 may provide the user with the guidance information IG and options (step S111). In one example, the display operating section 24 of the mobile terminal 40 may, for example, display the display image 100 illustrated in FIG. 9 or the display image 110 illustrated in FIG. 10 that provides the guidance information IG and the options, and the voice input-output section 25 of the mobile terminal 40 may, for example, output voice information corresponding to the guidance information IG. In a case where "Change job setting" has been selected, the controller 47 may generate the job setting information IJ2 (step S112).

Thereafter, the mobile terminal 40 may supply this job setting information IJ2 to the image processing apparatus 30 (step S113). The image processing apparatus 30 may store this job setting information IJ2 into the RAM 37A (step S114) and execute the job on the basis of this job setting information IJ2 (step S115). Operations thereafter may be similar to those in the case of the foregoing first example embodiment illustrated in FIG. 7B.

As described thus far, in the image processing system 2, the guidance information IG and the options may be generated on the basis of the job setting information IJ included in the print data DP and the information, i.e., the user setting information IU, on the user setting in the mobile terminal 40. Thus, it is possible to increase the user-friendliness, as in the case of the image processing system 1 according to the foregoing first example embodiment.

In the present example embodiment, the guidance information and the options may be generated on the basis of the job setting information included in the print data and the information on the user setting in the mobile terminal. Thus, it is possible to increase the user-friendliness.

### [Modification Example 2-1]

In the foregoing example embodiment, in step S209, the image processing apparatus 30 may transmit the guidance information IG and the job setting information IJ to the mobile terminal 40. This, however, is not a limiting example. In an alternative example, the image processing apparatus 30 may not transmit the job setting information IJ, for example. In this case, the mobile terminal 40 may, for example, refrain from generating the job setting information IJ2 in step S112 and supply, to the image processing apparatus 30, only the information on the setting value for a changed parameter in the job setting in step S113. Thereafter, in step S114, the image processing apparatus 30 may, for example, overwrite the setting value for this parameter in the job setting information IJ to generate the job setting information IJ2 and store the job setting information IJ2.

### [Modification Example 2-2]

In the foregoing example embodiment, the display operating section 24 of the mobile terminal 40 may display the guidance information IG and the options. This, however, is not a limiting example. In an alternative example, the display operating section 14 of the image processing apparatus 30 may, for example, display the guidance information IG and the options.

### [Other Modification Examples]

Each of the modification examples of the first example embodiment described above may be applied to the image processing system 2 according to the foregoing example embodiment.

### [3. Third Example Embodiment]

An image processing system 3 according to a third example embodiment will now be described. In the present example embodiment, an image may be formed on the basis of print data DP stored on a server. Components that are substantially identical to those of the image processing system 2 according to the foregoing second example embodiment will be given identical reference characters, and descriptions thereof will be omitted as appropriate.

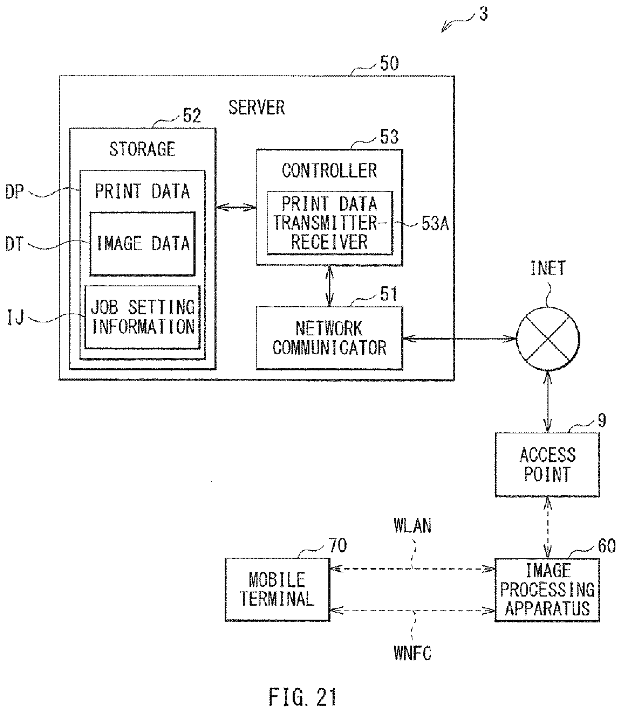

FIG. 21 illustrates an example of a configuration of the image processing system 3. The image processing system 3 may include a server 50, an image processing apparatus 60, and a mobile terminal 70. The server 50 may be a so-called cloud server and coupled to the Internet INET. An access point 9 may be a wireless LAN base station. The image processing apparatus 60 may be coupled to the Internet INET via the access point 9. The server 50 may include a network communicator 51, storage 52, and a controller 53.

The network communicator 51 may be coupled to the Internet INET and communicate in a wired network.

The storage 52 may include, for example but not limited to, a hard disk drive. The storage 52 may hold one or more pieces of print data DP. The print data DP may be supplied, for example, from an unillustrated personal computer or the image processing apparatus 60 to the server 50 and stored in the storage 52. Each piece of the print data DP may include the image data DT and the job setting information IJ.

The controller 53 may control an operation of the server 50. The controller 53 may include, for example but not limited to, a CPU, a RAM, and a nonvolatile memory. The controller 53 may hold information on the unillustrated job list JL indicating a list of jobs to be executed. The controller 53 may include a print data transmitter-receiver 53A. The print data transmitter-receiver 53A may receive, via the Internet INET and the network communicator 51, the print data DP transmitted from an unillustrated personal computer. Further, the print data transmitter-receiver 53A may transmit the print data DP and the job list JL to the image processing apparatus 60 via the network communicator 51, the Internet INET, and the access point 9 in response to a request from the image processing apparatus 60.

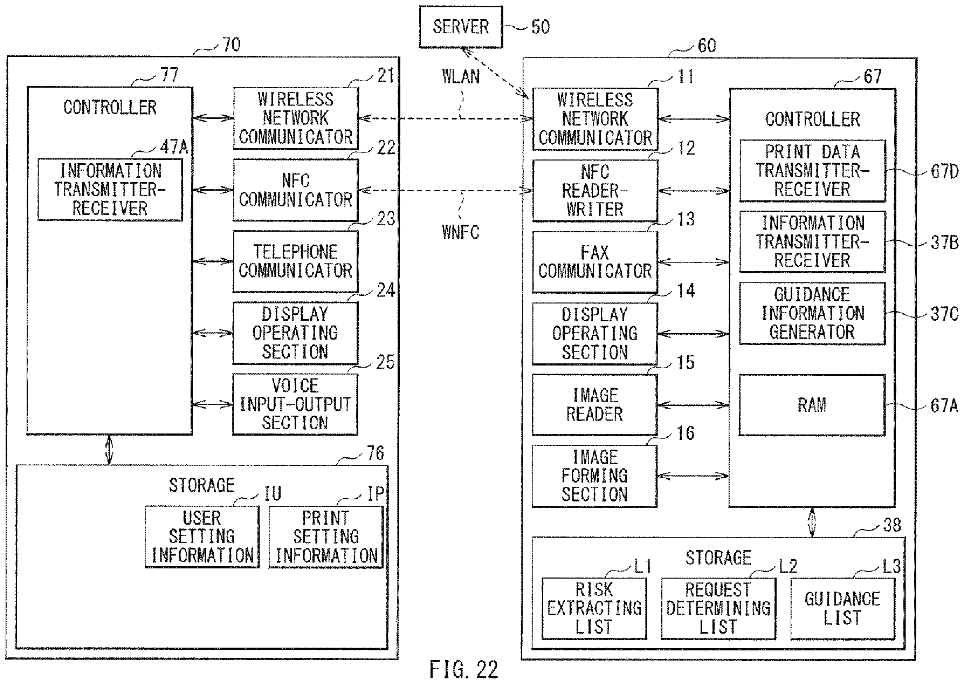

FIG. 22 illustrates an example of a configuration of the image processing apparatus 60 and the mobile terminal 70.

The image processing apparatus 60 may include a controller 67. The controller 67 may include a RAM 67A, the information transmitter-receiver 37B, the guidance information generator 37C, and a print data transmitter-receiver 67D. The RAM 67A may, for example, temporarily hold the print data DP supplied from the server 50. The print data transmitter-receiver 67D may transmit the print data DP to the server 50 via the wireless network communicator 11, the access point 9, and the Internet INET. Alternatively, the print data transmitter-receiver 67D may receive the print data DP and the job list JL transmitted from the server 50.

The mobile terminal 70 may include storage 76 and a controller 77. The storage 76 may hold the user setting information IU and print setting information IP. The print setting information IP may include information on a print setting to be held in a case where the mobile terminal 70 is operated to cause the image processing apparatus 60 to perform printing. For example, the print setting information IP may include information on the job setting with parameters identical to various parameters included in the job setting information IJ related to a print job. The controller 77 may include the information transmitter-receiver 47A.

In this example, the image processing apparatus 60 may correspond to the "image processing apparatus" in one specific but non-limiting embodiment of the technology. The controller 67 may correspond to the "controller" in one specific but non-limiting embodiment of the technology. The mobile terminal 70 may correspond to the "information processing terminal" in one specific but non-limiting embodiment of the technology.

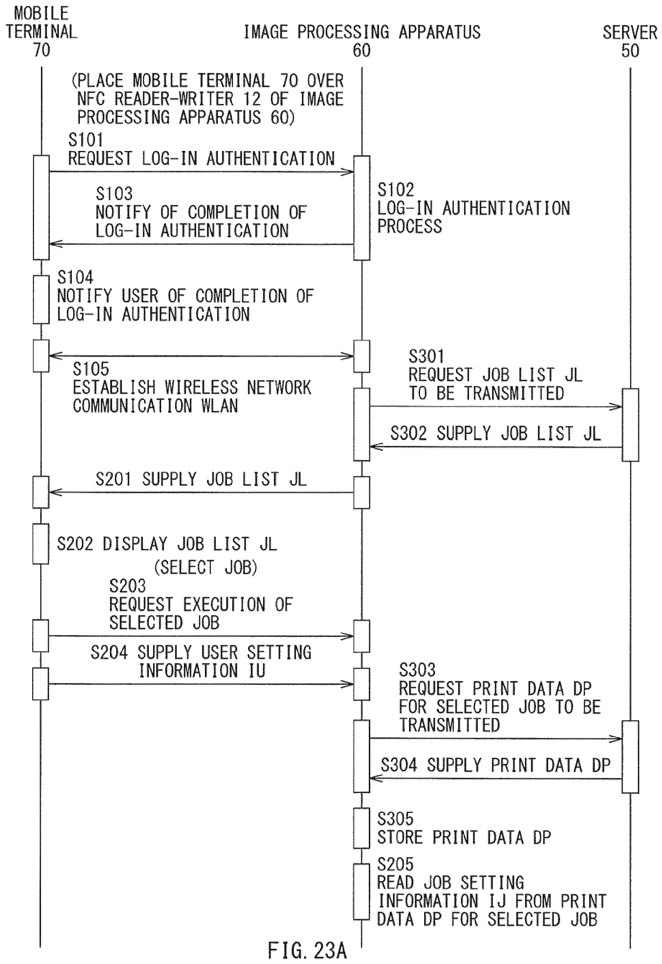

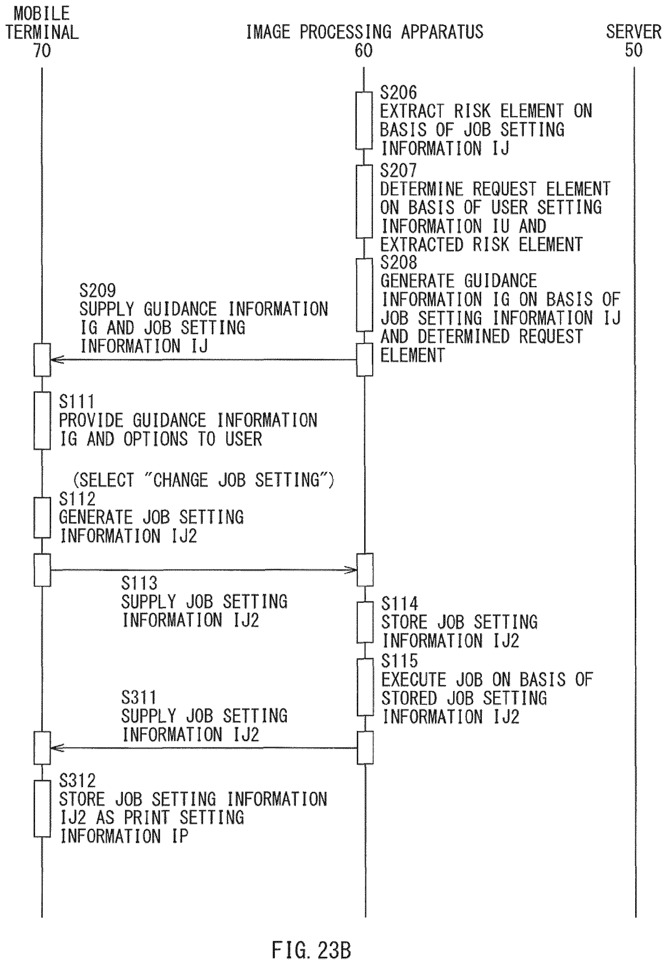

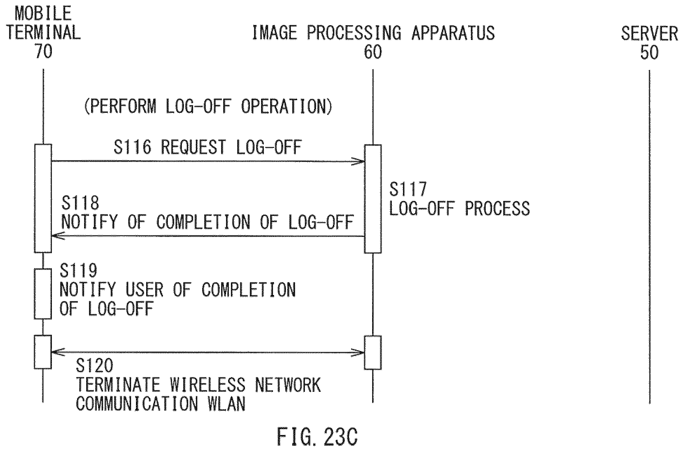

FIGs. 23A to 23C illustrate an example of an operation of the image processing system 3. As in the case of the image processing system 2 according to the foregoing second example embodiment illustrated in FIGs. 19A and 19B, the user may first place the mobile terminal 70 over the NFC reader-writer 12 of the image processing apparatus 60. Thus, the image processing apparatus 60 may perform a log-in authentication process. In a case where the log-in authentication is successful, the image processing apparatus 60 and the mobile terminal 70 may establish the wireless network communication WLAN (steps S101 to S105).

Thereafter, the image processing apparatus 60 may request the server 50 to transmit the job list JL (step S301). In one example, the print data transmitter-receiver 67D of the image processing apparatus 60 may transmit a transmission request for the job list JL to the server 50 via the wireless network communicator 11, the access point 9, and the Internet INET. The print data transmitter-receiver 53A of the server 50 may receive, via the network communicator 51, the transmission request for the job list JL transmitted by the image processing apparatus 60.

Thereafter, the server 50 may supply the job list JL to the image processing apparatus 60 (step S302). In one example, the print data transmitter-receiver 53A of the server 50 may transmit the job list JL to the image processing apparatus 60 via the network communicator 51, the Internet INET, and the access point 9. The print data transmitter-receiver 67D of the image processing apparatus 60 may receive, via the wireless network communicator 11, the job list JL transmitted by the server 50.

Thereafter, the image processing apparatus 60 may supply the job list JL to the mobile terminal 70 (step S201). Thereafter, the display operating section 24 of the mobile terminal 70 may display, for example, the display image 200 illustrated in FIG. 20 and thus display the job list JL (step S202). The user may select a job to be processed from this job list JL.

Thereafter, the mobile terminal 70 may request the image processing apparatus 60 to execute the selected job (step S203). Further, the mobile terminal 70 may supply the user setting information IU to the image processing apparatus 60 (step S204).

Thereafter, the image processing apparatus 60 may request the server 50 to transmit the print data DP for the selected job (step S303). In one example, the print data transmitter-receiver 67D of the image processing apparatus 60 may transmit a transmission request for the job list JL to the server 50 via the wireless network communicator 11, the access point 9, and the Internet INET. The print data transmitter-receiver 53A of the server 50 may receive, via the network communicator 51, the transmission request, for the print data DP for the selected job, transmitted by the image processing apparatus 60.

Thereafter, the server 50 may supply the print data DP for the selected job to the image processing apparatus 60 (step S304). In one example, the print data transmitter-receiver 53A of the server 50 may transmit the print data DP to the image processing apparatus 60 via the network communicator 51, the Internet INET, and the access point 9. The print data transmitter-receiver 67D of the image processing apparatus 60 may receive, via the wireless network communicator 11, the print data DP transmitted by the server 50.

Thereafter, the image processing apparatus 60 may store the print data DP received in step S304 into the RAM 67A (step S305).

Thereafter, the controller 67 of the image processing apparatus 60 may read the job setting information IJ included in the print data DP for the selected job (step S205).

Thereafter, the guidance information generator 37C of the image processing apparatus 60 may extract a risk element with the use of the risk extracting list L1 on the basis of the job setting information IJ (step S206). The guidance information generator 37C of the image processing apparatus 60 may determine a request element with the use of the request determining list L2 on the basis of the user setting information IU and the risk element extracted in step S206 (step S207). Further, the guidance information generator 37C of the image processing apparatus 60 may generate the guidance information IG with the use of the guidance list L3 on the basis of the job setting information IJ and the request element determined in step S207 (step S208).

Thereafter, the image processing apparatus 60 may supply the guidance information IG and the job setting information IJ to the mobile terminal 70 (step S209). Thereafter, the mobile terminal 70 may provide the user with the guidance information IG and options (step Sill). In one example, the display operating section 24 of the mobile terminal 70 may, for example, display the display image 100 illustrated in FIG. 9 or the display image 110 illustrated in FIG. 10 that provides the guidance information IG and the options, and the voice input-output section 25 of the mobile terminal 70 may, for example, output voice information corresponding to the guidance information IG. In a case where "Change job setting" has been selected, the controller 67 may generate the job setting information IJ2 (step S112).

Thereafter, the mobile terminal 70 may supply this job setting information IJ2 to the image processing apparatus 60 (step S113). The image processing apparatus 60 may store this job setting information IJ2 into the RAM 67A (step S114) and execute the job on the basis of this job setting information IJ2 (step S115).

Thereafter, the image processing apparatus 60 may supply the job setting information IJ2 to the mobile terminal 70 (step S311). In one example, the information transmitter-receiver 37B of the image processing apparatus 60 may transmit the job setting information IJ2 to the mobile terminal 70 via the wireless network communicator 11 with the use of the wireless network communication WLAN. The information transmitter-receiver 47A of the mobile terminal 70 may receive, via the wireless network communicator 21, the job setting information IJ2 transmitted by the image processing apparatus 60 with the use of the wireless network communication WLAN.

Thereafter, the controller 77 of the mobile terminal 70 may store the job setting information JL2 into the storage 76 as the print setting information IP (step S312).

Operations thereafter may be similar to those in the case of the foregoing second example embodiment illustrated in FIG. 19B.

As described thus far, in the image processing system 3, the guidance information IG and the options may be generated on the basis of the job setting information IJ included in the print data DP supplied from the server 50 and the information, i.e., the user setting information IU, on the user setting in the mobile terminal 70. Thus, it is possible to increase the user-friendliness, as in the case of the image processing system 2 according to the foregoing second example embodiment.

In the image processing system 3, the print setting information IP stored in the mobile terminal 70 may be updated with the use of the job setting information IJ2 used when a job is executed. Thus, in a case where the user is to execute a similar job by operating the mobile terminal 70 next time, the user may be able to use this print setting information IP. Thus, it is possible to obtain a better output result with ease. As a result, it is possible to increase the user-friendliness in the image processing system 3.

In the present example embodiment, the guidance information and the options may be generated on the basis of the job setting information included in the print data supplied from the server and the information on the user setting in the mobile terminal. Thus, it is possible to increase the user-friendliness.

### [Modification Example 3-1]

In the foregoing example embodiment, in step S209, the image processing apparatus 60 may transmit the guidance information IG and the job setting information IJ to the mobile terminal 70. This, however, is not a limiting example. In an alternative example, the image processing apparatus 60 may not transmit the job setting information IJ, for example. In this case, the mobile terminal 70 may, for example, refrain from generating the job setting information IJ2 in step S112 and supply, to the image processing apparatus 60, only the information on the setting value for a changed parameter in the job setting in step S113. Thereafter, in step S114, the image processing apparatus 60 may, for example, overwrite the setting value for this parameter in the job setting information IJ to generate the job setting information IJ2 and store this job setting information IJ2. Thereafter, in step S311, the image processing apparatus 60 may supply this job setting information IJ2 to the mobile terminal 70.

### [Modification Example 3-2]

In the foregoing example embodiment, the display operating section 24 of the mobile terminal 70 may display the guidance information IG and the options. This, however, is not a limiting example. In an alternative example, the display operating section 14 of the image processing apparatus 60 may, for example, display the guidance information IG and the options.

### [Modification Example 3-3]

In the foregoing example embodiment, the print data DP may be stored in the server 50, which is a cloud server. This, however, is not a limiting example. In an alternative example, the print data DP may be stored in a file server or a personal computer.

### [Other Modification Examples]

Each of the modification examples of the first example embodiment described above may be applied to the image processing system 3 according to the foregoing present example embodiment.

### [4. Fourth Example Embodiment]

An image processing system 4 according to a fourth example embodiment will now be described. In the present example embodiment, the guidance information IG may be generated on the basis of initial setting information of an image process in application software that instructs an image processing apparatus to perform an image process. In other words, in the foregoing first example embodiment, the guidance information IG may be generated on the basis of the information, i.e., the job setting information IJ, on the setting of a submitted job. Alternatively, in the present example embodiment, the guidance information IG may be generated on the basis of the initial setting information of an image process held when application software is started. Components that are substantially identical to those of the image processing system 1 according to the foregoing first example embodiment will be given identical reference characters, and descriptions thereof will be omitted as appropriate.

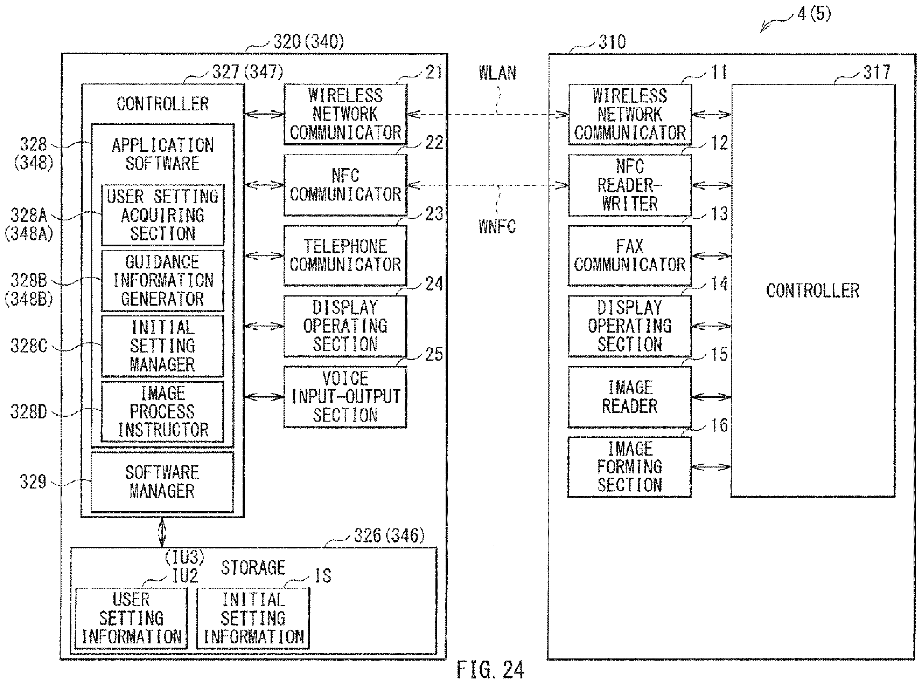

FIG. 24 illustrates an example of a configuration of the image processing system 4. The image processing system 4 may include an image processing apparatus 310 and a mobile terminal 320.

In the image processing system 4, application software, i.e., application software 328 described later, may be installed in the mobile terminal 320. The application software 328 may instruct the image processing apparatus 310 to perform an image process. When this application software 328 is started, the mobile terminal 320 may generate information, i.e., the guidance information IG, to be provided to the user on the basis of the initial setting information, i.e., initial setting information IS described later, of an image process in the application software 328 and information, i.e., user setting information IU2, on the user setting in the mobile terminal 320. The mobile terminal 320 may display this guidance information IG on the display operating section. The guidance information IG may include, for example, information on a setting that may serve as an alternative to the initial setting information IS. In a case where the user accepts a proposal indicated by the guidance information IG, the mobile terminal 320 may update the initial setting information IS in accordance with a user operation.

The image processing apparatus 310 may include the wireless network communicator 11, the NFC reader-writer 12, the FAX communicator 13, the display operating section 14, the image reader 15, the image forming section 16, and a controller 317. Similarly to the controller 17 according to the first example embodiment, the controller 317 may control an operation of the image processing apparatus 310 and include, for example but not limited to, a CPU, a RAM, and a nonvolatile memory.

The mobile terminal 320 may include the wireless network communicator 21, the NFC communicator 22, the telephone communicator 23, the display operating section 24, the voice input-output section 25, a controller 327, and storage 326.

The controller 327 may control an operation of the mobile terminal 320. The controller 327 may include, for example but not limited to, a CPU, a RAM, and a nonvolatile memory. The mobile terminal 320 may have an operating system and the application software 328 installed therein. The operating system may include a software manager 329.

The application software 328 may instruct the image processing apparatus 310 to perform an image process in accordance with a user operation. The application software 328 may include a user setting acquiring section 328A, a guidance information generator 328B, an initial setting manager 328C, and an image process instructor 328D.

The user setting acquiring section 328A may acquire the user setting information IU2 stored in the storage 326. The guidance information generator 328B may generate the guidance information IG on the basis of the user setting information IU2 and the initial setting information IS. The initial setting manager 328C may manage the initial setting information IS stored in the storage 326. The image process instructor 328D may instruct the image processing apparatus 310 to perform an image process.

The software manager 329 may perform an installation process and an uninstallation process of application software in the mobile terminal 320. Further, the software manager 329 may manage various pieces of software installed in the mobile terminal 320.

The storage 326 may hold the user setting information IU2 and the initial setting information IS.

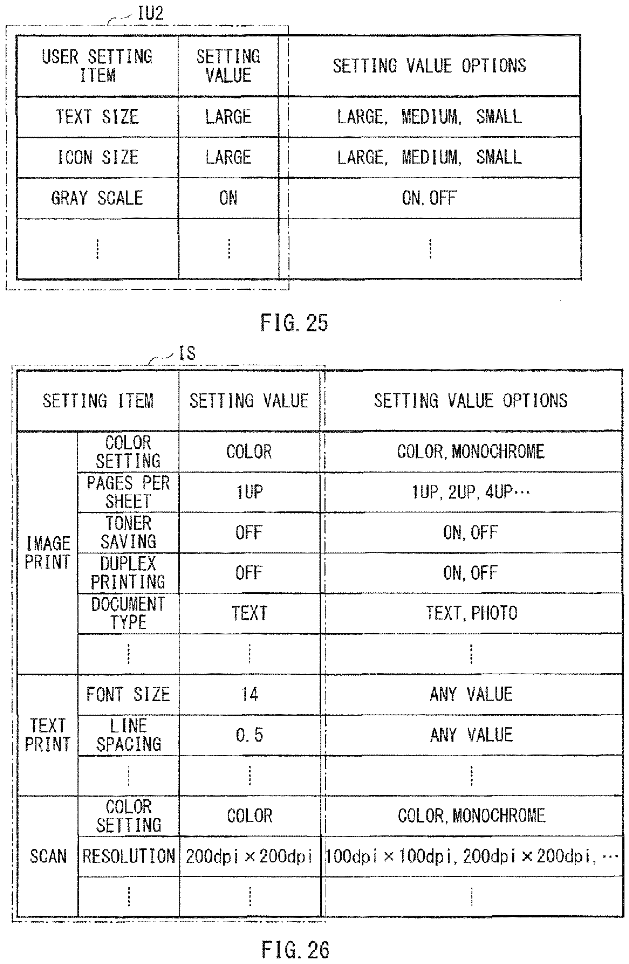

FIG. 25 illustrates an example of the user setting information IU2. The user setting information IU2 may include, for example, the setting values for various user setting items, i.e., parameters, such as "text size," "icon size," or "gray scale."

The "text size" may indicate the size of text displayed on the display operating section 24 of the mobile terminal 320. In this example, the "text size" may be set to "large." This "text size" may be set, for example, to one of "large," "medium," and "small."

The "icon size" may indicate the size of an icon displayed on the display operating section 24 of the mobile terminal 320. In this example, the "icon size" may be set to "large." This "icon size" may be set, for example, to one of "large," "medium," and "small."

The "gray scale" may indicate a display mode of the display operating section 24 of the mobile terminal 320. In this example, the "gray scale" may be set to "ON." This "gray scale" may be set, for example, to one of "ON" and "OFF." As the "gray scale" is set to "ON," the display operating section 24 may provide a display in gray scale. As the "gray scale" is set to "OFF," the display operating section 24 may provide a color display.

The initial setting information IS illustrated in FIG. 24 may be information on the initial values of the setting values for various setting items in an image process to be performed in the image processing apparatus 310. This initial setting information IS may be loaded by the application software 328 when the application software 328 is started.

FIG. 26 illustrates an example of the initial setting information IS. In this example, the initial setting information IS may include setting information concerning three setting items: "image print," "text print," and "scan."

The setting items for the "image print" may include detailed setting items such as "color setting," "pages per sheet," "toner saving," "duplex printing," or "document type." The "color setting" may be set, for example, to "color" or "monochrome." The "pages per sheet" may be set to one of, for example but not limited to, "1UP," "2UP," and "4UP." The "toner saving" may indicate whether printing is to be performed using a reduced amount of toner, i.e., developer. The "toner saving" may be set, for example, to "ON" or "OFF." The "duplex printing" may be set, for example, to "ON" or "OFF." The "document type" may be set, for example, to "text" or "photo."

The setting items for the "text print" may include detailed setting items such as "font size" or "line spacing." The "font size" and the "line spacing" may each be set to any value.

The setting items for the "scan" may include detailed setting items such as "color setting" or "resolution." The "color setting" may be set, for example, to "color" or "monochrome." The "resolution" may be set to one of, for example but not limited to, "100 dpi × 100 dpi," "200 dpi × 200 dpi," and "300 dpi × 300 dpi."

In one example, the setting values for these setting items in the initial setting information IS may be set to the setting values to be frequently used by the user when the user instructs the image processing apparatus 310 to perform an image process. Each time the application software 328 is started, the application software 328 may use the setting values included in the initial setting information IS as the initial values of the setting values for the setting items. The user may change, for example, only the setting values that need changing among these setting values. The application software 328 may instruct the image processing apparatus 310 to perform an image process with the use of the setting values for the setting items. Thus, the image processing system 4 may be able to save the user from inputting all the setting values for the setting items each time the application software 328 is started.

In this example, the image processing apparatus 310 may correspond to the "image processing apparatus" in one specific but non-limiting embodiment of the technology. The mobile terminal 320 may correspond to the "information processing terminal" in one specific but non-limiting embodiment of the technology. The storage 326 may correspond to the "storage" in one specific but non-limiting embodiment of the technology. The controller 327 may correspond to the "acquiring section" and the "controller" in one specific but non-limiting embodiment of the technology. The initial setting information IS may correspond to the "process setting information" in one specific but non-limiting embodiment of the technology. The user setting information IU2 may correspond to the "terminal setting information" in one specific but non-limiting embodiment of the technology.

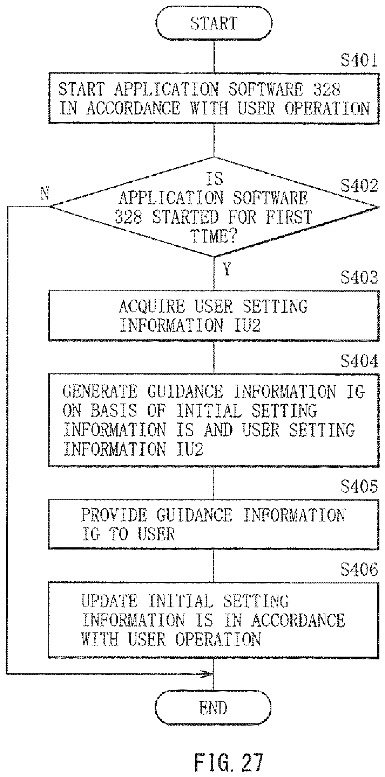

FIG. 27 illustrates an example of an operation of the mobile terminal 320 to be performed when the mobile terminal 320 starts the application software 328.

First, the controller 327 of the mobile terminal 320 may start the application software 328 in accordance with a user operation (step S401). At this point, the application software 328 may read out the initial setting information IS from the storage 326.

Thereafter, the application software 328 may check whether the application software 328 is started for the first time since the application software 328 has been installed (step S402). In a case where this is not the first time the application software 328 is started ("N" in step S402), this flow may be brought to an end.

In step S402, in a case where the application software 328 is started for the first time since the application software 328 has been installed ("Y" in step S402), the user setting acquiring section 328A may acquire the user setting information IU2 stored in the storage 326 (step S403).

Thereafter, the guidance information generator 328B may generate the guidance information IG on the basis of the initial setting information IS and the user setting information IU2 acquired in step S403 (step S404).

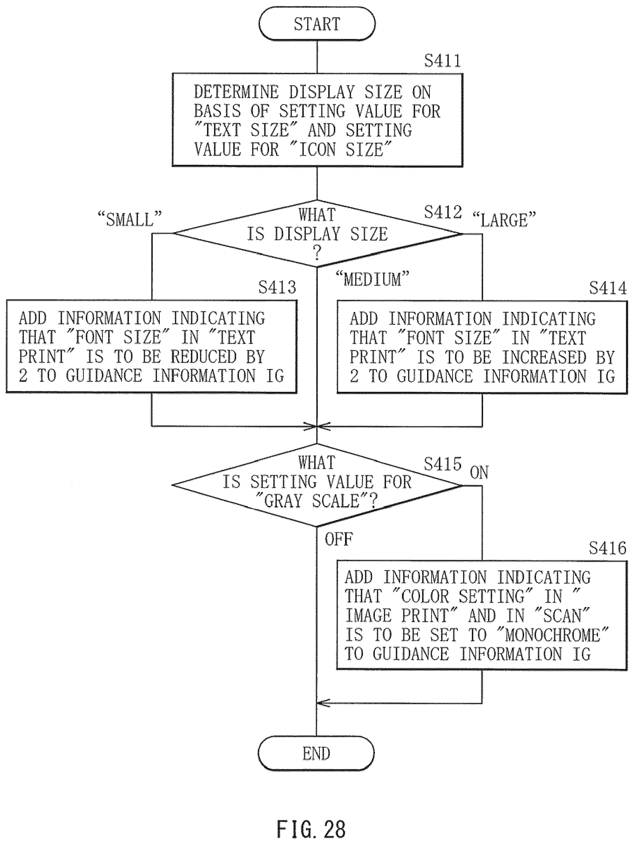

FIG. 28 illustrates an example of a process of generating the guidance information IG in step S404.

First, the guidance information generator 328B may determine a display size on the display operating section 24 on the basis of the setting value for the "text size" and the setting value for the "icon size" included in the user setting information IU2 (step S411).

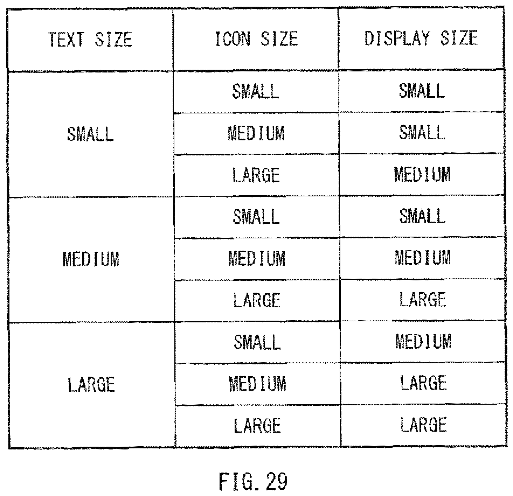

FIG. 29 illustrates an example of a correspondence relationship among the "text size," the "icon size," and the display size. In this example, the guidance information generator 328B may determine the display size to be "small" in a case where the setting value for the "text size" and the setting value for the "icon size" are both "small" or in a case where one of the setting value for the "text size" and the setting value for the "icon size" is "small" and the other one of the setting values is "medium." The guidance information generator 328B may determine the display size to be "large" in a case where the setting value for the "text size" and the setting value for the "icon size" are both "large" or in a case where one of the setting value for the "text size" and the setting value for the "icon size" is "large" and the other one of the setting values is "medium." The guidance information generator 328B may determine the display size to be "medium" in a case where the setting value for the "text size" and the setting value for the "icon size" are both "medium" or in a case where one of the setting value for the "text size" and the setting value for the "icon size" is "small" and the other one of the setting values is "large."

Thereafter, the guidance information generator 328B may check the display size determined in step S411 (step S412). In a case where the display size is "medium" ("MEDIUM" in step S412), the flow may proceed to step S415.

In a case where the display size is "small" in step S412 ("SMALL" in step S412), the guidance information generator 328B may add, to the guidance information IG, information indicating that the setting value for the "font size" in the "text print" is to be reduced by "2" (step S413). In other words, in a case where the display size is "small," the guidance information generator 328B may determine, for example, that the user is able to read small text and reduce the setting value for the "font size." Thereafter, the flow may proceed to step S415.

In a case where the display size is "large" in step S412 ("LARGE" in step S412), the guidance information generator 328B may add, to the guidance information IG, information indicating that the setting value for the "font size" in the "text print" is to be increased by "2" (step S414). In other words, in a case where the display size is "large," the guidance information generator 328B may determine, for example, that the user has difficulty reading small text and increase the setting value for the "font size." Thereafter, the flow may proceed to step S415.

Thereafter, the guidance information generator 328B may check the setting value for the "gray scale" included in the user setting information IU2 (step S415). In a case where the setting value for the "gray scale" is "OFF" ("OFF" in step S415), the flow may be brought to an end. In a case where the setting value for the "gray scale" is "ON" ("ON" in step S415), the guidance information generator 328B may add, to the guidance information IG, information indicating that the setting values for the "color setting" in the "image print" and in the "scan" are each to be set to "monochrome" on the basis of the initial setting information IS (step S416). In other words, in a case where the setting value for the "gray scale" is "ON," the guidance information generator 328B may determine, for example, that the user may have difficulty recognizing colors and set the setting value for the "color setting" to "monochrome." For example, in a case where the setting values for the "color setting" in the "image print" and in the "scan" are already "monochrome" in the initial setting information IS, the guidance information generator 328B may refrain from adding, to the guidance information IG, the information indicating that the setting value for the "color setting" is to be set to "monochrome." In other words, in this case, since the setting value for the "color setting" is already "monochrome" in the initial setting information IS, there may be no need to change the setting value in the initial setting information IS.

In this manner, the guidance information generator 328B may generate the guidance information IG, and this flow may be brought to the end.

Thereafter, as illustrated in FIG. 27, the initial setting manager 328C may provide the guidance information IG to the user (step S405). In one example, the display operating section 24 of the mobile terminal 320 may display, for example, a display image 160 that provides the guidance information IG, on the basis of an instruction from the initial setting manager 328C.

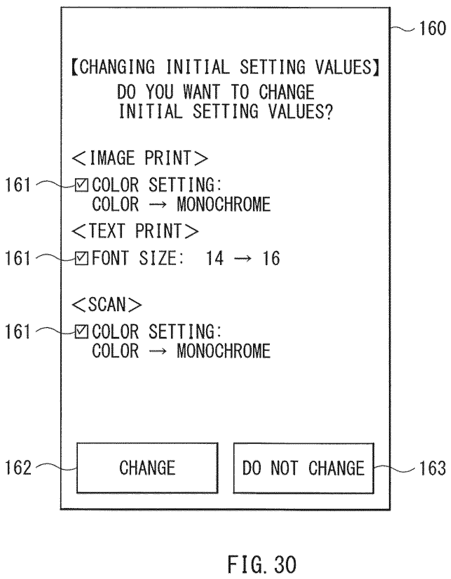

FIG. 30 illustrates an example of the display image 160. In this example, in the user setting information IU2, the "text size" may be set to "large," the "icon size" may be set to "large," and the "gray scale" may be set to "ON," as illustrated in FIG. 25. Thus, the guidance information IG may include the information indicating that the setting value for the "color setting" in the "image print" is to be set to "monochrome," the information indicating that the setting value for the "font size" in the "text print" is to be increased by "2," and the information indicating that the setting value for the "color setting" in the "scan" is to be set to "monochrome." The initial setting manager 328C may make a proposal corresponding to this guidance information IG to the user with the use of the display image 160. In one example, the initial setting manager 328C may propose that the setting value for the "color setting" in the "image print" be changed from the current setting value of "color" to "monochrome," propose that the setting value for the "font size" in the "text print" be changed from the current setting value of "14" to "16," and propose that the setting value for the "color setting" in the "scan" be changed from the current setting value of "color" to "monochrome."

The display image 160 may have a checkbox 161 provided for each setting item. In this example, these checkboxes may be checked in advance. The user may be able to input whether the user accepts the proposal for each setting item by operating these checkboxes. In a case where the user operates a "CHANGE" button 162, the initial setting manager 328C may update the initial setting information IS in accordance with the state of each checkbox 161. In a case where the user operates a "DO NOT CHANGE" button 163, the initial setting manager 328C may discard the content of this guidance information IG. In this case, the initial setting manager 328C may refrain from updating the initial setting information IS.

In a case where the user accepts the proposal indicated by the guidance information IG, the user may operate the "CHANGE" button 162. Thus, the initial setting manager 328C may update the initial setting information IS in accordance with the user operation (step S406).

Thus, this flow may be brought to an end. Thereafter, each time the application software 328 is started, the application software 328 may be able to use the setting values included in this initial setting information IS as the initial values of the setting values for the respective setting items.

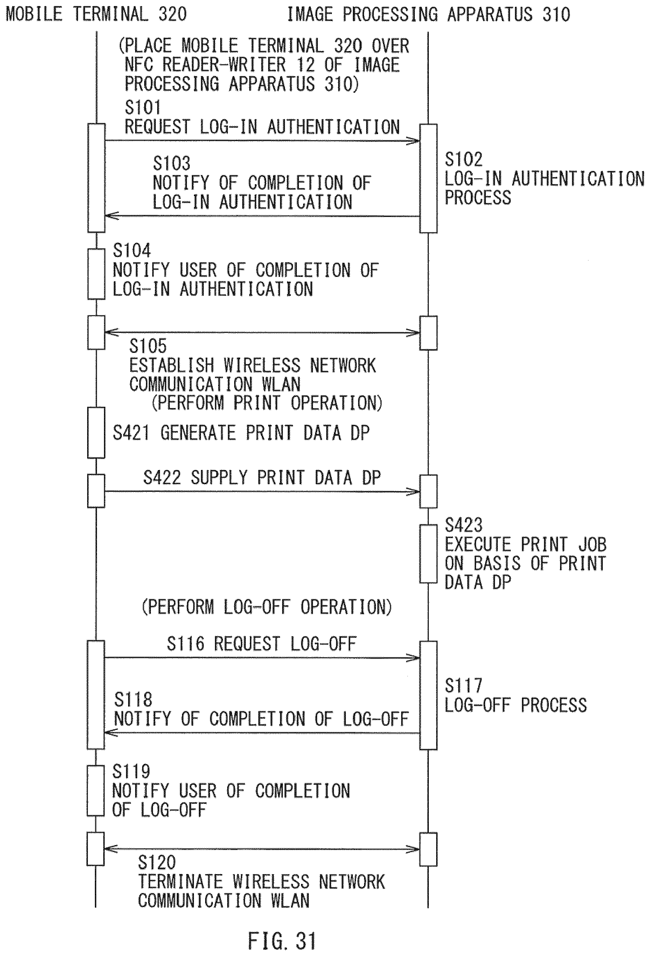

FIG. 31 illustrates an example of an operation of the image processing system 4. In this example, after the initial setting information IS is set as described above, the user may submit a print job to the image processing apparatus 310 by operating the mobile terminal 320.

As in the case of the image processing system 1 according to the foregoing first example embodiment illustrated in FIG. 7A, the user may first place the mobile terminal 320 over the NFC reader-writer 12 of the image processing apparatus 310. Thus, the image processing apparatus 310 may perform a log-in authentication process. In a case where the log-in authentication is successful, the image processing apparatus 310 and the mobile terminal 320 may establish the wireless network communication WLAN (steps S101 to S105).

Thereafter, the user may operate the mobile terminal 320, and the controller 327 may start the application software 328. In this example, this is not the first time the application software 328 is started since the application software 328 has been installed ("N" in step S402 of FIG. 27). Therefore, the application software 328 may refrain from generating the guidance information IG. When being started, the application software 328 may use the setting values included in the initial setting information IS stored in the storage 326 as the initial values of the setting values for the respective setting items. Thereafter, the user may change, for example, only the setting values that need changing among these setting values. Thereafter, upon the user issuing a print instruction by operating the mobile terminal 320, the image process instructor 328D of the application software 328 may generate the print data DP with the use of the setting value for each setting item in accordance with the user operation (step S421). This print data DP may include the image data DT and the job setting information IJ including the setting value for each setting item.

Thereafter, the mobile terminal 320 may supply this print data DP to the image processing apparatus 310 (step S422). In one example, the mobile terminal 320 may transmit the print data DP to the image processing apparatus 310 via the wireless network communicator 21 with the use of the wireless network communication WLAN. The image processing apparatus 310 may receive, via the wireless network communicator 11, the print data DP transmitted by the mobile terminal 320 with the use of the wireless network communication WLAN.

Thereafter, the image processing apparatus 310 may execute a print job on the basis of the received print data DP (step S423).

Thereafter, the user may, for example, perform a log-off operation by operating the display operating section 24 of the mobile terminal 320. Thus, the mobile terminal 320 may make a request to log off from the image processing apparatus 310 with the use of the wireless network communication WLAN (step S116). Thereafter, the image processing apparatus 310 may perform a log-off process (step S117). The image processing apparatus 310 may notify the mobile terminal 320 of completion of the log-off with the use of the near-field communication WNFC (step S118). Thereafter, the mobile terminal 320 may notify the user of completion of the log-off (step S119). Thereafter, the image processing apparatus 310 and the mobile terminal 320 may terminate the wireless network communication WLAN (step S120).

As described thus far, in the image processing system 4, the guidance information IG may be generated on the basis of the initial setting information IS and the user setting information IU2. Thus, in the image processing system 4, the setting information necessary for the user when the image processing apparatus 310 performs an image process may be inferred on the basis of the user setting information IU2, and it is possible to propose such setting information to the user. For example, in a case where the setting value for the "text size" and the setting value for the "icon size" are "large" in the user setting information IU2, the mobile terminal 320 may infer that the user may have difficulty reading small text and propose that the "font size" to be adopted in printing be increased. For example, in a case where the setting value for the "gray scale" in the user setting information IU2 is "ON," the mobile terminal 320 may infer that the user may have difficulty recognizing colors and propose monochrome printing. Accordingly, it is possible to save the user from extra work of changing the setting and going through reprinting because of the difficulty in reading the printed text, for example. As a result, it is possible to increase the user-friendliness in the image processing system 4.

In the present example embodiment, as described thus far, the guidance information may be generated on the basis of the initial setting information and the user setting information. Thus, it is possible to increase the user-friendliness.

### [Modification Example 4-1]

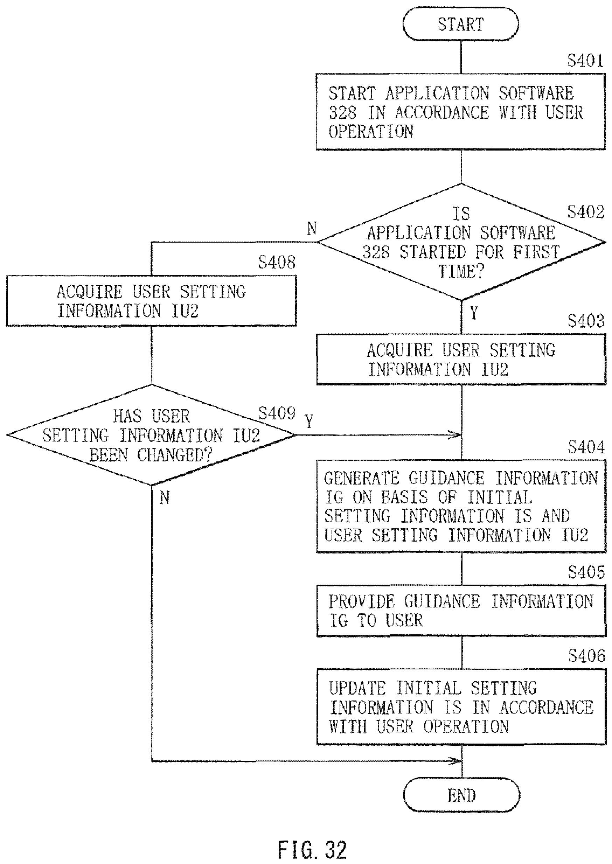

In the foregoing example embodiment, the guidance information IG may be generated in a case where the application software 328 is started for the first time since the application software 328 has been installed. This, however, is not a limiting example. For example, the guidance information IG may be generated when the application software 328 is installed. As illustrated in FIG. 32, in a case where it is not the first time the application software 328 is started ("N" in step S402), the user setting acquiring section 328A may acquire the user setting information IU2 (step S408). Further, in a case where this user setting information IU2 is changed ("Y" in step S409), the guidance information generator 328B may generate the guidance information IG. Thus, for example, in a case where the user uses the mobile terminal 320 for many years, the guidance information IG may be generated when the user setting information IU2 is changed, and the initial setting information IS may be updated. Thus, it is possible to increase the user-friendliness.

### [Modification Example 4-2]

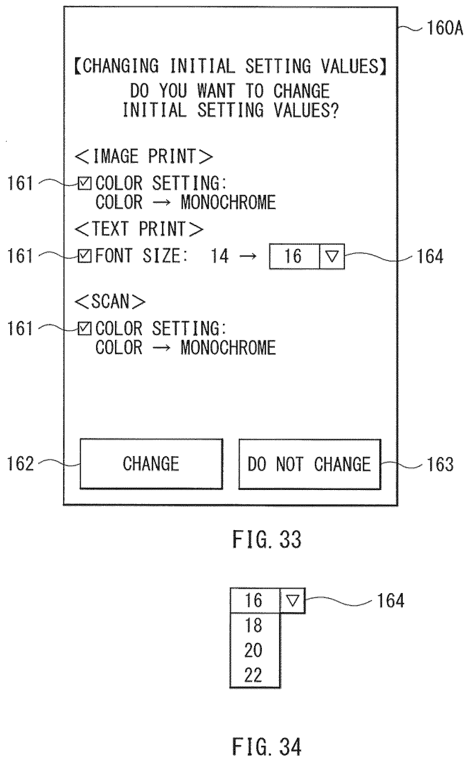

In the foregoing example embodiment, the mobile terminal 320 may display the setting values on the basis of the guidance information IG, as in the display image 160 illustrated in FIG. 30. This, however, is not a limiting example. For example, the setting values may be allowed to be changed, as in a display image 160A illustrated in FIG. 33. In this example, the initial setting manager 328C may propose that the setting value for the "font size" in the "text print" be changed from the current setting value of "14" to "16." In this example, a pull-down box 164 may be provided, and the user may be able to select one of a plurality of setting values for the "font size" by operating the pull-down box 164. In this example, since "2" is added to the current setting value of "14" for the "font size" in step S414 of FIG. 28, "16" may be selected and displayed in the pull-down box 164 in the initial state, for example. As the user operates this pull-down box 164, as illustrated in FIG. 34, the mobile terminal 320 may display a plurality of setting values for the "font size." In this example, a plurality of setting values that are greater than the current setting value for the "font size" may be displayed. This, however, is not a limiting example. Alternatively, the mobile terminal 320 may display both a plurality of setting values that are smaller than the current setting value and a plurality of setting values that are greater than the current setting value.

### [5. Fifth Example Embodiment]

An image processing system 5 according to a fifth example embodiment will now be described. In the present example embodiment, an energy-saving parameter indicating the level of energy saving may be obtained on the basis of the user setting information, and the guidance information IG may be generated on the basis of this energy-saving parameter. Components that are substantially identical to those of the image processing system 4 according to the foregoing fourth example embodiment will be given identical reference characters, and descriptions thereof will be omitted as appropriate.

As illustrated in FIG. 24, the image processing system 5 may include a mobile terminal 340. The mobile terminal 340 may include a controller 347 and storage 346.

The controller 347 may control an operation of the mobile terminal 340. The mobile terminal 340 may have application software 348 installed therein.

The application software 348 may instruct the image processing apparatus 310 to perform an image process in accordance with a user operation. The application software 348 may include a user setting acquiring section 348A and a guidance information generator 348B. The user setting acquiring section 348A may acquire user setting information IU3 stored in the storage 346. The guidance information generator 348B may generate the guidance information IG on the basis of the user setting information IU3 and the initial setting information IS. In one example, the guidance information generator 348B may obtain an energy-saving parameter X indicating the level of energy saving on the basis of the user setting information IU3 and generate the guidance information IG on the basis of this energy-saving parameter X.

The storage 346 may hold the user setting information IU3 and the initial setting information IS.

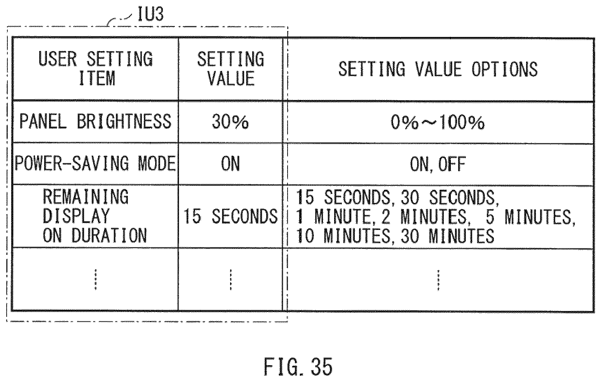

FIG. 35 illustrates an example of the user setting information IU3. The user setting information IU3 may include, for example, the setting values for various user setting items, i.e., parameters, such as "panel brightness," "power-saving mode," or "remaining display on duration."

The "panel brightness" may indicate the brightness of a display on the display operating section 24 of the mobile terminal 340. In this example, the "panel brightness" may be set to "30%." This "panel brightness" may be set to any value that is no lower than "0%" nor higher than "100%," for example.

The "power-saving mode" may indicate an operation mode that reduces power consumption in the mobile terminal 340 by limiting a portion of the operation of the mobile terminal 340. In this example, the "power-saving mode" may be set to "ON." This "power-saving mode" may be set, for example, to "ON" or "OFF."

The "remaining display on duration" may indicate the duration remaining until the display operating section 24 stops the display since the user has finished operating the display operating section 24 of the mobile terminal 340. In this example, the "remaining display on duration" may be set to "15 seconds." This "remaining display on duration" may be set, for example, to one of "15 seconds," "30 seconds," "1 minute," "2 minutes," "5 minutes," "10 minutes," and "30 minutes."

In this example, the mobile terminal 340 may correspond to the "information processing terminal" in one specific but non-limiting embodiment of the technology. The storage 346 may correspond to the "storage" in one specific but non-limiting embodiment of the technology. The controller 347 may correspond to the "acquiring section" and the "controller" in one specific but non-limiting embodiment of the technology. The user setting information IU3 may correspond to the "terminal setting information" in one specific but non-limiting embodiment of the technology.

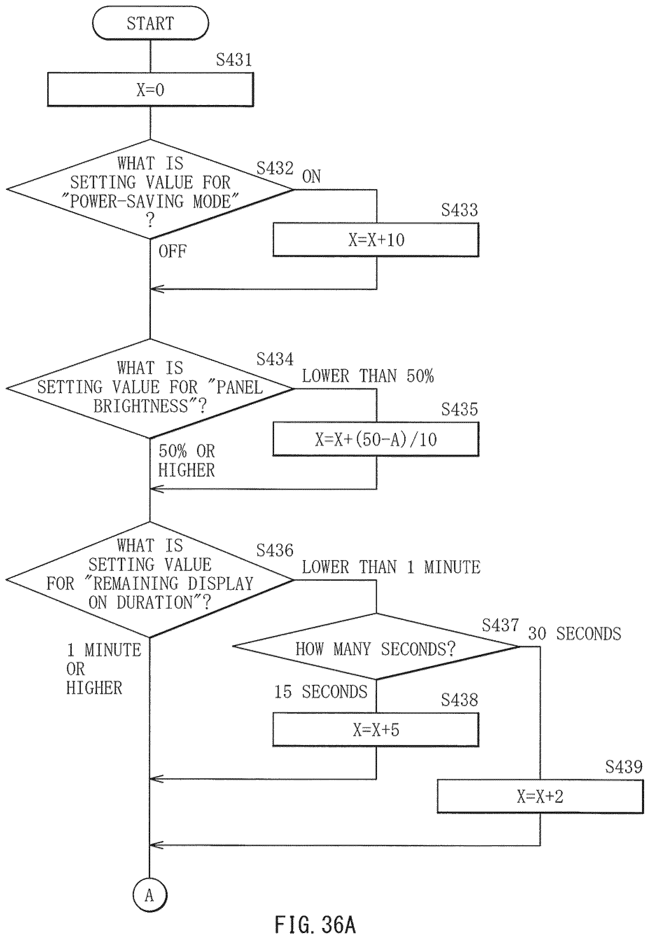

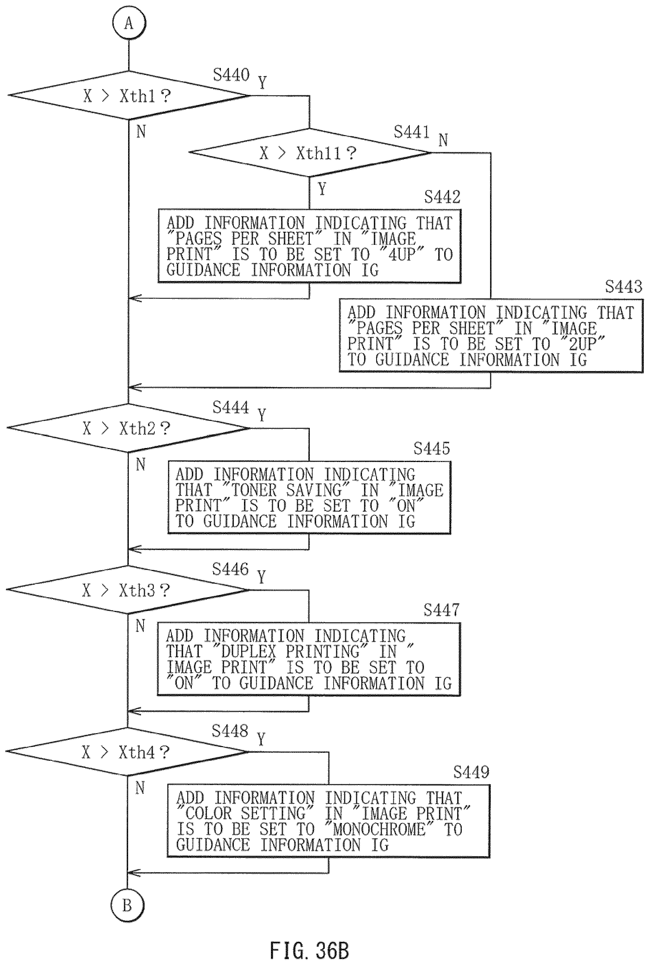

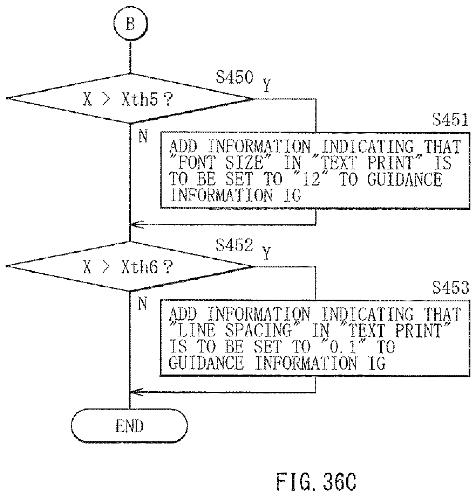

FIGs. 36A, 36B, and 36C illustrate an example of a process of generating the guidance information IG in step S404 of FIG. 27.

First, the guidance information generator 348B may initialize the energy-saving parameter X, i.e., set X to 0 (zero) (step S431).

Thereafter, the guidance information generator 348B may check the setting value for the "power-saving mode" included in the user setting information IU3 (step S432). In a case where the setting value for the "power-saving mode" is "OFF" ("OFF" in step S432), the flow may proceed to step S434. In a case where the setting value for the "power-saving mode" is "ON" ("ON" in step S432), the guidance information generator 348B may add "10" to the energy-saving parameter X (step S433). In other words, in a case where the setting value for the "power-saving mode" is "ON," the guidance information generator 348B may, for example, determine that the user is highly conscious about saving energy and increase the energy-saving parameter X. Thereafter, the flow may proceed to step S434.

Thereafter, the guidance information generator 348B may check the setting value for the "panel brightness" included in the user setting information IU3 (step S434). In a case where the setting value for the "panel brightness" is "50%" or higher ("50% OR HIGHER" in step S434), the flow may proceed to step S436. In a case where the setting value for the "panel brightness" is lower than "50%" ("LOWER THAN 50%" in step S434), the guidance information generator 348B may add "(50 - A)/10" to the energy-saving parameter X (step S435). In this example, "A" may be the setting value for the "panel brightness." In other words, in a case where the setting value for the "panel brightness" is lower than "50%," the guidance information generator 348B may, for example, determine that the user is highly conscious about saving energy and increase the energy-saving parameter X further as the setting value for the "panel brightness" is lower. Thereafter, the flow may proceed to step S436.

Thereafter, the guidance information generator 348B may check the setting value for the "remaining display on duration" included in the user setting information IU3 (step S436). In a case where the setting value for the "remaining display on duration" is "1 minute" or higher ("1 MINUTE OR HIGHER" in step S436), the flow may proceed to step S440. In step S436, in a case where the setting value for the "remaining display on duration" is lower than "1 minute" ("LOWER THAN 1 MINUTE" in step S436), the guidance information generator 348B may check the number of seconds in the setting value for the "remaining display on duration" (step S437). In a case where the setting value for the "remaining display on duration" is "15 seconds" ("15 SECONDS" in step S437), the guidance information generator 348B may add "5" to the energy-saving parameter X (step S438). In a case where the setting value for the "remaining display on duration" is "30 seconds" ("30 SECONDS" in step S437), the guidance information generator 348B may add "2" to the energy-saving parameter X (step S439). In other words, in a case where the setting value for the "remaining display on duration" is "15 seconds," the guidance information generator 348B may, for example, determine that the user is highly conscious about saving energy. In a case where the setting value for the "remaining display on duration" is "30 seconds," the guidance information generator 348B may, for example, determine that the user is somewhat conscious about saving energy. Thus, the guidance information generator 348B may increase the energy-saving parameter X in accordance with the setting value for the "remaining display on duration." Thereafter, the flow may proceed to step S440.

Thereafter, the guidance information generator 348B may check whether the energy-saving parameter X is greater than a threshold value Xth1, i.e., whether X > Xth1 holds (step S440). In a case where the energy-saving parameter X is not greater than the threshold value Xth1 ("N" in step S440), the flow may proceed to step S444. In a case where the energy-saving parameter X is greater than the threshold value Xth1 in step S440 ("Y" in step S440), the guidance information generator 348B may check whether the energy-saving parameter X is greater than a threshold value Xth11, i.e., whether X > Xth11 holds (step S441). The threshold value Xth11 may be greater than the threshold value Xth1, i.e., Xth11 > Xth1 may hold. In a case where the energy-saving parameter X is greater than the threshold value Xth11 ("Y" in step S441), the guidance information generator 348B may add, to the guidance information IG, information indicating that the setting value for the "pages per sheet" in the "image print" is to be set to "4UP" on the basis of the initial setting information IS (step S442). In a case where the energy-saving parameter X is not greater than the threshold value Xth11 ("N" in step S441), the guidance information generator 348B may add, to the guidance information IG, information indicating that the setting value for the "pages per sheet" in the "image print" is to be set to "2UP" on the basis of the initial setting information IS (step S443). In other words, in a case where the energy-saving parameter X is greater than the threshold value Xth1, the guidance information generator 348B may determine that the user is highly conscious about saving energy. Thus, the guidance information generator 348B may set the setting value for the "pages per sheet" to a value corresponding to the energy-saving parameter X in order to reduce the number of sheets to be printed. For example, in a case where the setting value for the "pages per sheet" in the "image print" is already "4UP" in the initial setting information IS, the guidance information generator 348B may refrain from adding, to the guidance information IG, the information indicating that the setting value for the "pages per sheet" is to be set to "4UP." In a case where the setting value for the "pages per sheet" in the "image print" is already "2UP" in the initial setting information IS, the guidance information generator 348B may refrain from adding, to the guidance information IG, the information indicating that the setting value for the "pages per sheet" is to be set to "2UP." Thereafter, the flow may proceed to step S444.

Thereafter, the guidance information generator 348B may check whether the energy-saving parameter X is greater than a threshold value Xth2, i.e., whether X > Xth2 holds (step S444). In a case where the energy-saving parameter X is not greater than the threshold value Xth2 ("N" in step S444), the flow may proceed to step S446. In a case where the energy-saving parameter X is greater than the threshold value Xth2 in step S444 ("Y" in step S444), the guidance information generator 348B may add, to the guidance information IG, information indicating that the setting value for the "toner saving" in the "image print" is to be set to "ON" on the basis of the initial setting information IS (step S445). In other words, in a case where the energy-saving parameter X is greater than the threshold value Xth2, the guidance information generator 348B may determine that the user is highly conscious about saving energy. Thus, the guidance information generator 348B may set the setting value for the "toner saving" to "ON" in order to reduce the amount of toner to be used. For example, in a case where the setting value for the "toner saving" in the "image print" is already "ON" in the initial setting information IS, the guidance information generator 348B may refrain from adding, to the guidance information IG, the information indicating that the setting value for the "toner saving" is to be set to "ON." Thereafter, the flow may proceed to step S446.

Thereafter, the guidance information generator 348B may check whether the energy-saving parameter X is greater than a threshold value Xth3, i.e., whether X > Xth3 holds (step S446). In a case where the energy-saving parameter X is not greater than the threshold value Xth3 ("N" in step S446), the flow may proceed to step S448. In a case where the energy-saving parameter X is greater than the threshold value Xth3 in step S446 ("Y" in step S446), the guidance information generator 348B may add, to the guidance information IG, information indicating that the setting value for the "duplex printing" in the "image print" is to be set to "ON" on the basis of the initial setting information IS (step S447). In other words, in a case where the energy-saving parameter X is greater than the threshold value Xth3, the guidance information generator 348B may determine that the user is highly conscious about saving energy. Thus, the guidance information generator 348B may set the setting value for the "duplex printing" to "ON" in order to reduce the number of sheets to be printed. For example, in a case where the setting value for the "duplex printing" in the "image print" is already "ON" in the initial setting information IS, the guidance information generator 348B may refrain from adding, to the guidance information IG, the information indicating that the setting value for the "duplex printing" is to be set to "ON." Thereafter, the flow may proceed to step S448.

Thereafter, the guidance information generator 348B may check whether the energy-saving parameter X is greater than a threshold value Xth4, i.e., whether X > Xth4 holds (step S448). In a case where the energy-saving parameter X is not greater than the threshold value Xth4 ("N" in step S448), the flow may proceed to step S450. In a case where the energy-saving parameter X is greater than the threshold value Xth4 in step S448 ("Y" in step S448), the guidance information generator 348B may add, to the guidance information IG, information indicating that the setting value for the "color setting" in the "image print" is to be set to "monochrome" on the basis of the initial setting information IS (step S449). In other words, in a case where the energy-saving parameter X is greater than the threshold value Xth4, the guidance information generator 348B may determine that the user is highly conscious about saving energy. Thus, the guidance information generator 348B may set the setting value for the "color setting" to "monochrome" in order to use a black toner, which costs less than a color toner. For example, in a case where the setting value for the "color setting" in the "image print" in the initial setting information IS is already "monochrome" in the initial setting information IS, the guidance information generator 348B may refrain from adding, to the guidance information IG, the information indicating that the setting value for the "color setting" is to be set to "monochrome." Thereafter, the flow may proceed to step S450.

Thereafter, the guidance information generator 348B may check whether the energy-saving parameter X is greater than a threshold value Xth5, i.e., whether X > Xth5 holds (step S450). In a case where the energy-saving parameter X is not greater than the threshold value Xth5 ("N" in step S450), the flow may proceed to step S452. In a case where the energy-saving parameter X is greater than the threshold value Xth5 in step S450 ("Y" in step S450), the guidance information generator 348B may add, to the guidance information IG, information indicating that the setting value for the "font size" in the "text print" is to be set to "12" on the basis of the initial setting information IS (step S451). In other words, in a case where the energy-saving parameter X is greater than the threshold value Xth5, the guidance information generator 348B may determine that the user is highly conscious about saving energy. Thus, the guidance information generator 348B may reduce the "font size" in order to reduce the number of sheets to be printed. For example, in a case where the setting value for the "font size" in the "text print" is already "12" in the initial setting information IS, the guidance information generator 348B may refrain from adding, to the guidance information IG, the information indicating that the setting value for the "font size" is to be set to "12." Thereafter, the flow may proceed to step S452.

Thereafter, the guidance information generator 348B may check whether the energy-saving parameter X is greater than a threshold value Xth6, i.e., whether X > Xth6 holds (step S452). In a case where the energy-saving parameter X is not greater than the threshold value Xth6 ("N" in step S452), the flow may be brought to an end. In a case where the energy-saving parameter X is greater than the threshold value Xth6 in step S452 ("Y" in step S452), the guidance information generator 348B may add, to the guidance information IG, information indicating that the setting value for the "line spacing" in the "text print" is to be set to "0.1" on the basis of the initial setting information IS (step S453). In other words, in a case where the energy-saving parameter X is greater than the threshold value Xth6, the guidance information generator 348B may determine that the user is highly conscious about saving energy. Thus, the guidance information generator 348B may set the setting value for the "line spacing" to "0.1" in order to reduce the number of sheets to be printed. For example, in a case where the setting value for the "line spacing" in the "text print" is already "0.1" in the initial setting information IS, the guidance information generator 348B may refrain from adding, to the guidance information IG, the information indicating that the setting value for the "line spacing" is to be set to "0.1."

In this manner, the guidance information generator 348B may generate the guidance information IG.

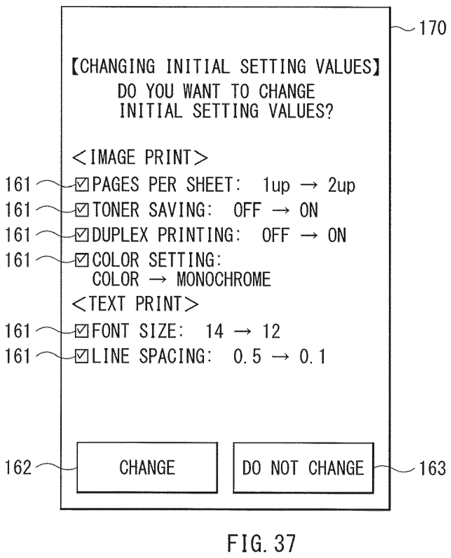

FIG. 37 illustrates an example of a display image 170 that provides the guidance information IG generated as described above. In this example, in the user setting information IU3, the "panel brightness" may be set to "30%," the "power-saving mode" may be set to "ON," and the "remaining display on duration" may be set to "15 seconds," as illustrated in FIG. 35. Thus, in this example, the guidance information IG may include information indicating that the setting value for the "pages per sheet" in the "image print" is to be set to "2UP," information indicating that the setting value for the "toner saving" in the "image print" is to be set to "ON," information indicating that the setting value for the "duplex printing" in the "image print" is to be set to "ON," information indicating that the setting value for the "color setting" in the "image print" is to be set to "monochrome," information indicating that the setting value for the "font size" in the "text print" is to be set to "12," and information indicating that the setting value for the "line spacing" in the "text print" is to be set to "0.1." The initial setting manager 328C may make a proposal corresponding to this guidance information IG to the user with the use of the display image 170. In one example, the initial setting manager 328C may propose that the setting value for the "pages per sheet" in the "image print" be changed from the current setting value of "1UP" to "2UP," propose that the setting value for the "toner saving" in the "image print" be changed from the current setting value of "OFF" to "ON," propose that the setting value for the "duplex printing" in the "image print" be changed from the current setting value of "OFF" to "ON," propose that the setting value for the "color setting" in the "image print" be changed from the current setting value of "color" to "monochrome," propose that the setting value for the "font size" in the "text print" be changed from the current setting value of "14" to "12," and propose that the setting value for the "line spacing" in the "text print" be changed from the current setting value of "0.5" to "0.1."

As described thus far, in the image processing system 5, the energy-saving parameter X indicating the level of energy saving may be obtained on the basis of the user setting information IU3, and the guidance information IG may be generated on the basis of this energy-saving parameter X. In one example, this energy-saving parameter X may be compared against a threshold value corresponding to each setting item. In a case where the energy-saving parameter X exceeds the threshold value, the setting value for the corresponding setting item may be allowed to be changed. In this manner, setting a threshold value for each setting item makes it possible to change the setting value for each setting item with higher flexibility on the basis of the energy-saving parameter X. In one example, it is possible to vary the setting item that is allowed to be changed among a case where the energy-saving parameter X is high, a case where the energy-saving parameter X is somewhat high, and a case where the energy-saving parameter X is very high. As indicated in steps S440 to S443, it is possible to vary the setting value to be proposed in the setting item in accordance with the energy-saving parameter X. As a result, in the image processing system 5, it is possible to increase the flexibility in proposing the setting value for each setting item. Thus, it is possible to increase the user-friendliness.

In the present example embodiment, as described thus far, the energy-saving parameter indicating the level of energy saving may be obtained on the basis of the user setting information, and the guidance information may be generated on the basis of this energy-saving parameter. Thus, it is possible to increase the user-friendliness.

### [6. Sixth Example Embodiment]

An image processing system 6 according to a sixth example embodiment will now be described. In the present example embodiment, information on an application program installed in the mobile terminal may be used as information on the user setting, and the guidance information IG may be generated on the basis of this information. Components that are substantially identical to those of the image processing system 4 according to the foregoing fourth example embodiment will be given identical reference characters, and descriptions thereof will be omitted as appropriate.

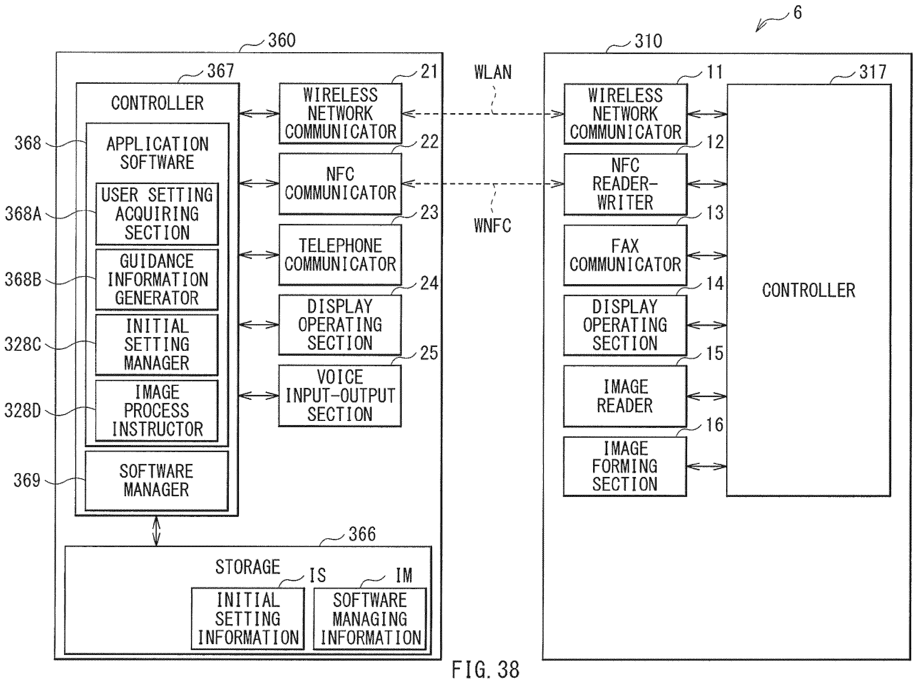

FIG. 38 illustrates an example of a configuration of the image processing system 6. The image processing system 6 may include a mobile terminal 360. The mobile terminal 360 may include a controller 367 and storage 366.

The controller 367 may control an operation of the mobile terminal 360. The mobile terminal 360 may have an operating system and a plurality of pieces of application software installed therein. The operating system may include a software manager 369. The plurality of pieces of application software may include application software 368, application software SP for photo or the like, and application software ST for text or the like. The application software SP may mainly handle a photo image and may be, for example but not limited to, photo managing software or image editing software. The application software ST may mainly handle text and may be, for example but not limited to, mailing software or word processor software.

The software manager 369 may perform an installation process or an uninstallation process of application software in the mobile terminal 360. Further, the software manager 369 may manage various pieces of software installed in the mobile terminal 360. The software manager 369 may manage various pieces of software installed in the mobile terminal 360 with the use of software managing information IM stored in the storage 366. The software managing information IM may include information on whether each piece of software is the application software SP for photo or the like and information on whether each piece of software is the application software ST for text or the like. The application software installed in the mobile terminal 360 may have been installed by the user to increase the usability of the mobile terminal 360 and may pertain to a so-called user setting.

The application software 368 may instruct the image processing apparatus 310 to perform an image process in accordance with a user operation. The application software 368 may include a user setting acquiring section 368A and a guidance information generator 368B. The user setting acquiring section 368A may acquire the software managing information IM stored in the storage 366. The guidance information generator 368B may generate the guidance information IG on the basis of the software managing information IM and the initial setting information IS. In one example, the guidance information generator 368B may check the number NSP of pieces of application software SP for photo or the like installed in the mobile terminal 360 and the number NST of pieces of application software ST for text or the like installed in the mobile terminal 360 on the basis of the software managing information IM and generate the guidance information IG on the basis of these numbers NSP and NST.

The storage 366 may hold the software managing information IM and the initial setting information IS.

In this example, the mobile terminal 360 may correspond to the "information processing terminal" in one specific but non-limiting embodiment of the technology. The storage 366 may correspond to the "storage" in one specific but non-limiting embodiment of the technology. The controller 367 may correspond to the "acquiring section" and the "controller" in one specific but non-limiting embodiment of the technology. The information on the application software installed in the mobile terminal 360 and the software managing information IM may correspond to the "terminal setting information" in one specific but non-limiting embodiment of the technology.

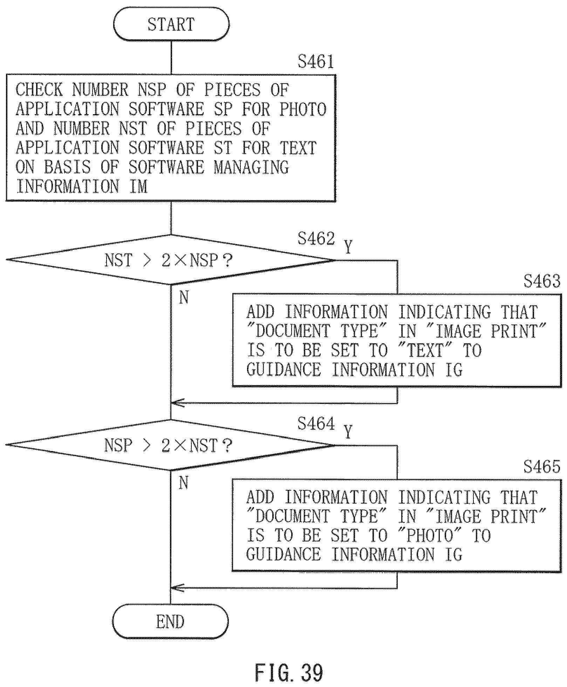

FIG. 39 illustrates an example of a process of generating the guidance information IG in step S404 of FIG. 27.

First, the guidance information generator 368B may check the number NSP of pieces of application software SP for photo or the like installed in the mobile terminal 360 and the number NST of pieces of application software ST for text or the like installed in the mobile terminal 360 on the basis of the software managing information IM (step S461).

Thereafter, the guidance information generator 368B may check whether the number NST of pieces of application software ST for text or the like is greater than twice the number NSP of pieces of application software SP for photo or the like, i.e., whether NST > 2 × NSP holds (step S462). In a case where the number NST of pieces of application software ST for text or the like is not greater than twice the number NSP of pieces of application software SP for photo or the like ("N" in step S462), the flow may proceed to step S464. In a case where the number NST of pieces of application software ST for text or the like is greater than twice the number NSP of pieces of application software SP for photo or the like ("Y" in step S462), the guidance information generator 368B may add, to the guidance information IG, information indicating that the setting value for the "document type" in the "image print" is to be set to "text" on the basis of the initial setting information IS (step S463). In other words, in a case where the number NST of pieces of application software ST for text or the like is greater than twice the number NSP of pieces of application software SP for photo or the like, the guidance information generator 368B may, for example, determine that it is more frequent for the user to instruct printing with the use of the application software ST for text or the like than with the use of the application software SP for photo or the like and may set the setting value for the "document type" to "text." For example, in a case where the setting value for the "document type" in the "image print" is already "text" in the initial setting information IS, the guidance information generator 368B may refrain from adding, to the guidance information IG, the information indicating that the setting value for the "document type" is to be set to "text." Thereafter, the flow may proceed to step S464.

Thereafter, the guidance information generator 368B may check whether the number NSP of pieces of application software SP for photo or the like is greater than twice the number NST of pieces of application software ST for text or the like, i.e., whether NSP > 2 × NST holds (step S464). In a case where the number NSP of pieces of application software SP for photo or the like is not greater than twice the number NST of pieces of application software ST for text ("N" in step S464), the flow may be brought to an end. In a case where the number NSP of pieces of application software SP for photo or the like is greater than twice the number NST of pieces of application software ST for text or the like ("Y" in step S464), the guidance information generator 368B may add, to the guidance information IG, information indicating that the setting value for the "document type" in the "image print" is to be set to "photo" on the basis of the initial setting information IS (step S465). In other words, in a case where the number NSP of pieces of application software SP for photo or the like is greater than twice the number NST of pieces of application software ST for text or the like, the guidance information generator 368B may, for example, determine that it is more frequent for the user to instruct printing with the use of the application software SP for photo or the like than with the use of the application software ST for text or the like and may set the setting value for the "document type" to "photo." For example, in a case where the setting value for the "document type" in the "image print" is already "photo" in the initial setting information IS, the guidance information generator 368B may refrain from adding, to the guidance information IG, the information indicating that the setting value for the "document type" is to be set to "photo."

In this manner, the guidance information generator 368B may generate the guidance information IG.

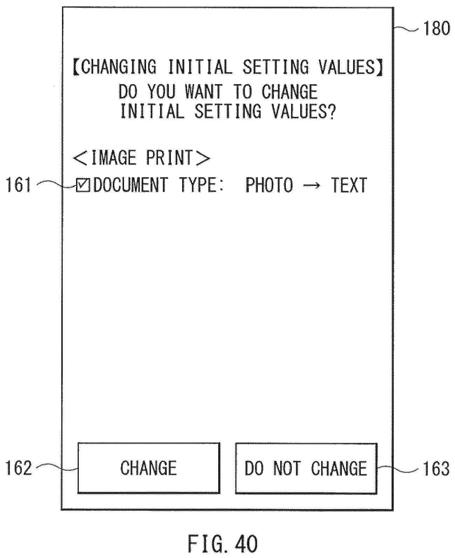

FIG. 40 illustrates an example of a display image 180 that provides the guidance information IG generated as described above. This example may illustrate a case where the number NST of pieces of application software ST for text or the like is greater than twice the number NSP of pieces of application software SP for photo or the like. Therefore, in this example, the guidance information IG may include information indicating that the setting value for the "document type" in the "image print" is to be set to "text." The initial setting manager 328C may propose that the setting value for the "document type" in the "image print" be changed from the current setting value of "photo" to "text."

As described thus far, in the image processing system 6, the guidance information IG may be generated on the basis of the application software installed in the mobile terminal 360. In one example, the guidance information IG may be generated on the basis of the software managing information IM. The application software installed in the mobile terminal 360 may have been installed by the user to increase the usability of the mobile terminal 360 and may pertain to a so-called user setting. In the image processing system 6, it is possible to change the setting value for each setting item on the basis of information on such a user setting. Thus, it is possible to increase the user-friendliness.

As described above, in the present example embodiment, the guidance information may be generated on the basis of the application software installed in the mobile terminal. Thus, it is possible to increase the user-friendliness.

### [Modification Example 6]

In the foregoing example embodiment, the guidance information IG may be generated on the basis of the application software installed in the mobile terminal 360. This, however, is not a limiting example. In an alternative example, the guidance information IG may be generated, for example, on the basis of a file stored in the mobile terminal 360. In one example, the mobile terminal 360 may check the number of files for photo or the like and the number of files for text or the like on the basis of files stored in a predetermined folder, such as a download folder for holding a downloaded file or a folder for holding captured photographs. Further, the mobile terminal 360 may be able to generate the guidance information IG on the basis of these numbers. For example, the guidance information IG may be generated on the basis of the web browsing history. In one example, the mobile terminal 360 may check the number of times photo-based web pages are browsed and the number of times text-based web pages are browsed and may be able to generate the guidance information IG on the basis of these numbers.

Thus far, the technology has been described with reference to some example embodiments and modification examples. The technology, however, is not limited to these example embodiments and modification examples, and various other modifications are possible.

For example, in the foregoing example embodiments and modification examples, the technology is applied to an image processing apparatus that is a multifunction peripheral, but this is not a limiting example. In an alternative example, the technology may be applied to a single-function apparatus, such as a copier, a printer, a scanner, or a facsimile.

Furthermore, the technology encompasses any possible combination of some or all of the various embodiments and the modifications described herein and incorporated herein. It is possible to achieve at least the following configurations from the above-described example embodiments of the technology.
(1) An image processing method, including:
   performing, by an image processing system including an image processing apparatus and an information processing terminal that are able to communicate with each other, a first process that acquires process setting information, the process setting information being used by the image processing apparatus when the image processing apparatus performs a predetermined image process;
   performing, by the image processing system, a second process that acquires terminal setting information stored in the information processing terminal, the terminal setting information being used in the information processing terminal;
   performing, by the image processing system, a third process that generates guidance information pertaining to the process setting information on a basis of the process setting information and the terminal setting information; and
   displaying, by the image processing system, the guidance information.
(2) The image processing method according to (1), in which
   the process setting information includes setting information pertaining to one or more parameters, and
   the guidance information includes setting information pertaining to the one or more parameters, the setting information included in the guidance information being different from the setting information included in the process setting information.
(3) The image processing method according to (1) or (2),
   in which, in the third process, the image processing system performs determination, on the basis of the process setting information and the terminal setting information, as to whether to generate the guidance information, and
   in which, in the third process, the image processing system generates the guidance information on the basis of a result of the determination.
(4) The image processing method according to any one of (1) to (3), further including:
   receiving, by the image processing system, a user operation with a use of an operating section after the guidance information is displayed; and
   updating, by the image processing apparatus, the process setting information and performing, by the image processing apparatus, the predetermined image process on the basis of the updated process setting information.
(5) The image processing method according to any one of (1) to (4), further including generating, by the image processing apparatus, the process setting information on the basis of an instruction from an operating section that receives a user operation, in which
   the predetermined image process includes a printing process, and
   the process setting information includes information on a print setting.
(6) The image processing method according to any one of (1) to (4), in which
   the predetermined image process includes a printing process, and
   the process setting information includes information on a print setting included in print data prestored in the image processing apparatus.
(7) The image processing method according to (6), further including receiving, by the image processing apparatus, the print data transmitted from a server that contains the print data.
(8) The image processing method according to any one of (1) to (4), further including generating, by the image processing apparatus, the process setting information on the basis of an instruction from an operating section that receives a user operation, in which
   the predetermined image process includes an image reading process, and
   the process setting information includes information on an image reading setting.
(9) The image processing method according to any one of (1) to (4), in which first software is installed in the information processing terminal, the first software, upon being executed, instructing the image processing apparatus to perform the predetermined image process after the first process, the second process, and the third process are performed.
(10) The image processing method according to (9), in which the process setting information includes initial setting information for the predetermined image process in the first software.
(11) The image processing method according to (9) or (10), in which the information processing terminal performs the first process, the second process, and the third process when the first software is executed for a first time since the first software has been installed.
(12) The image processing method according to any one of (9) to (11), in which the terminal setting information includes information on one or more pieces of second software installed in the information processing terminal.
(13) The image processing method according to any one of (1) to (12), in which the terminal setting information includes setting information pertaining to a screen display of the information processing terminal.
(14) The image processing method according to any one of (1) to (13), in which the terminal setting information includes information stored in the information processing terminal and set by a user associated with the information processing terminal.
(15) An image processing apparatus, including:
   a communicator that acquires terminal setting information from an information processing terminal, the terminal setting information being used in the information processing terminal;
   an image processing section that performs a predetermined image process; and
   a controller that generates guidance information pertaining to process setting information, the process setting information being used when the image processing section performs the predetermined image process, the guidance information being generated on the basis of the process setting information and the terminal setting information.
(16) The image processing apparatus according to (15), further including a display that displays the guidance information.
(17) The image processing apparatus according to (15), in which the communicator supplies the guidance information to the information processing terminal.
(18) An information processing terminal, including:
   an acquiring section that acquires process setting information, the process setting information being used when an image processing apparatus performs a predetermined image process;
   storage that holds terminal setting information used in the information processing terminal; and
   a controller that generates guidance information pertaining to the process setting information on the basis of the process setting information and the terminal setting information.
(19) The information processing terminal according to (18), further including a display that displays the guidance information.
(20) The information processing terminal according to (18), further including a supplying section that supplies the guidance information to the image processing apparatus.

The image processing method, the image processing apparatus, and the information processing terminal according to one embodiment of the technology each generate the guidance information for the process setting information on the basis of the process setting information and the terminal setting information. Thus, it is possible to increase user-friendliness.

Although the technology has been described in terms of exemplary embodiments, it is not limited thereto. It should be appreciated that variations may be made in the described embodiments by persons skilled in the art without departing from the scope of the invention as defined by the following claims. The limitations in the claims are to be interpreted broadly based on the language employed in the claims and not limited to examples described in this specification or during the prosecution of the application, and the examples are to be construed as non-exclusive. For example, in this disclosure, the term "preferably", "preferred" or the like is non-exclusive and means "preferably", but not limited to. The use of the terms first, second, etc. do not denote any order or importance, but rather the terms first, second, etc. are used to distinguish one element from another. The term "substantially" and its variations are defined as being largely but not necessarily wholly what is specified as understood by one of ordinary skill in the art. The term "about" or "approximately" as used herein can allow for a degree of variability in a value or range. Moreover, no element or component in this disclosure is intended to be dedicated to the public regardless of whether the element or component is explicitly recited in the following claims.

## Claims

1. An image processing method, comprising:
performing, by an image processing system (1, 1A, 2, 3, 4, 5, 6) including an image processing apparatus (10, 10A, 30, 60, 310) and an information processing terminal (20, 40, 70, 320, 340, 360) that are able to communicate with each other, a first process that acquires process setting information (IJ, IJ2, IS), the process setting information (IJ, IJ2, IS) being used by the image processing apparatus (10, 10A, 30, 60, 310) when the image processing apparatus (10, 10A, 30, 60, 310) performs a predetermined image process;
performing, by the image processing system (1, 1A, 2, 3, 4, 5, 6), a second process that acquires terminal setting information (CL, IU, IU2, IU3, IM) stored in the information processing terminal (20, 40, 70, 320, 340, 360), the terminal setting information (CL, IU, IU2, IU3, IM) being used in the information processing terminal (20, 40, 70, 320, 340, 360);
performing, by the image processing system (1, 1A, 2, 3, 4, 5, 6), a third process that generates guidance information (IG) pertaining to the process setting information (IJ, IJ2, IS) on a basis of the process setting information (IJ, IJ2, IS) and the terminal setting information (CL, IU, IU2, IU3, IM); and
displaying, by the image processing system (1, 1A, 2, 3, 4, 5, 6), the guidance information (IG).

2. The image processing method according to claim 1, wherein
the process setting information (IJ, IJ2, IS) includes setting information pertaining to one or more parameters, and
the guidance information (IG) includes setting information pertaining to the one or more parameters, the setting information included in the guidance information (IG) being different from the setting information included in the process setting information (IJ, IJ2, IS).

3. The image processing method according to claim 1 or 2,
wherein, in the third process, the image processing system (1, 1A, 2, 3, 4, 5, 6) performs determination, on the basis of the process setting information (IJ, IJ2, IS) and the terminal setting information (CL, IU, IU2, IU3, IM), as to whether to generate the guidance information (IG), and
wherein, in the third process, the image processing system (1, 1A, 2, 3, 4, 5, 6) generates the guidance information (IG) on a basis of a result of the determination.

4. The image processing method according to any one of claims 1 to 3, further comprising:
receiving, by the image processing system (1, 1A, 2, 3, 4, 5, 6), a user operation with a use of an operating section (14, 24) after the guidance information (IG) is displayed; and
updating, by the image processing apparatus (10, 10A, 30, 60, 310), the process setting information (IJ, IJ2, IS) and performing, by the image processing apparatus (10, 10A, 30, 60, 310), the predetermined image process on a basis of the updated process setting information (IJ, IJ2, IS).

5. The image processing method according to any one of claims 1 to 4, further comprising generating, by the image processing apparatus (10), the process setting information (IJ, IJ2) on a basis of an instruction from an operating section (14) that receives a user operation, wherein
the predetermined image process includes a printing process, and
the process setting information (IJ, IJ2) includes information on a print setting.

6. The image processing method according to any one of claims 1 to 4, wherein
the predetermined image process includes a printing process, and
the process setting information (IJ, IJ2) comprises information on a print setting included in print data (DP) prestored in the image processing apparatus (30, 60).

7. The image processing method according to claim 6, further comprising receiving, by the image processing apparatus (60), the print data (DP) transmitted from a server (50) that contains the print data (DP).

8. The image processing method according to any one of claims 1 to 4, further comprising generating, by the image processing apparatus (10), the process setting information (IJ, IJ2) on a basis of an instruction from an operating section (14) that receives a user operation, wherein
the predetermined image process includes an image reading process, and
the process setting information (IJ, IJ2) includes information on an image reading setting.

9. The image processing method according to any one of claims 1 to 4, wherein first software (328, 348, 368) is installed in the information processing terminal (320, 340, 360), the first software (328, 348, 368), upon being executed, instructing the image processing apparatus (310) to perform the predetermined image process after the first process, the second process, and the third process are performed.

10. The image processing method according to claim 9, wherein the process setting information (IS) includes initial setting information (IS) for the predetermined image process in the first software (328, 348, 368).

11. The image processing method according to claim 9 or 10, wherein the information processing terminal (320, 340, 360) performs the first process, the second process, and the third process when the first software (328, 348, 368) is executed for a first time since the first software (328, 348, 368) has been installed.

12. The image processing method according to any one of claims 9 to 11, wherein the terminal setting information (IM) includes information on one or more pieces of second software (SP, ST) installed in the information processing terminal (360).

13. The image processing method according to any one of claims 1 to 12, wherein the terminal setting information (CL, IU) includes setting information pertaining to a screen display of the information processing terminal (20, 40, 70).

14. The image processing method according to any one of claims 1 to 13, wherein the terminal setting information (CL, IU) includes information stored in the information processing terminal (20, 40, 70) and set by a user associated with the information processing terminal (20, 40, 70).
